(19) **Europäisches Patentamt**
**European Patent Office**
**Office européen des brevets**

(11) **EP 2 172 899 A1**

(12) **EUROPEAN PATENT APPLICATION**
published in accordance with Art. 153(4) EPC

(43) Date of publication:
**07.04.2010 Bulletin 2010/14**

(51) Int Cl.:
*G06Q 50/00* (2006.01)   *G06F 13/00* (2006.01)

(21) Application number: **07791053.7**

(22) Date of filing: **20.07.2007**

(86) International application number:
**PCT/JP2007/064315**

(87) International publication number:
**WO 2009/013788 (29.01.2009 Gazette 2009/05)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Hewlett-Packard Development Company, L.P.**
**Houston, TX 77070 (US)**

(72) Inventor: **SHIMIZU, Hiroyuki**
**Tokyo 168-8585 (JP)**

(74) Representative: **Exell, Jonathan Mark**
**Williams Powell**
**Staple Court**
**11 Staple Inn Buildings**
**London**
**WC1V 7QH (GB)**

(54) **INFORMATION PROPAGATION ANALYZING SYSTEM, INFORMATION PROPAGATION ANALYZING APPARATUS, METHOD OF INFORMATION PROPAGATION ANALYSIS AND PROGRAM THEREFOR**

(57)    An information propagation analyzing system and method of information propagation analysis. Information propagation analyzing apparatus (3) analyzes the relationship among multiple message informations exchanged within a community space monitored by web server (24) and creates information on inter-message chain structure. The information propagation analyzing apparatus (3) computes the message propagation capacity for each of the message informations on the basis of the inter-message chain structure. The information propagation analyzing apparatus (3) computes the degree of information propagation between members belonging to the community on the basis of the message propagation capacity. The information propagation analyzing apparatus (3) constructs a social network consisting of a group wherein information is likely to easily propagate on the basis of the degree of information propagation between members.

Figure 1

**Description**

Technical Field

The present invention relates to an information diffusion analysis system, an information diffusion analysis server, an information diffusion analysis method, and a program therefor.

Background Art

In recent years, many services and studies are centered around social networks, which are formed from social connections.

A social network is a network built from reciprocal relations which are formed between people and through which influence is exerted consciously or unconsciously.

Research on finding a structure of a social network has also been made.

For instance, Non-patent Document 1 has disclosed a method of extracting an interpersonal relation, in which a search engine is used to find a person's name from a web page or the like.

Patent Document 1 discloses an information sharing setting method for enabling an authority user who has authority to set a right to access shared information contents, such as a creator of the shared information contents, to set the right to access the shared information contents in a distribution server which distributes over a computer network shared information contents, including information that is wished to be shared among a plurality of users.

Patent Document 2 discloses a method of generating an information transmission network using individuals' positional relations with a biased net model as the basic structure.

Patent Document 3 discloses a reciprocal relation displaying device for creating and displaying a network graph which expresses a network structure based on a "core-satellite" relation.

Non-patent Document 2 discloses a method of extracting a structure of a community from, for example, an amount of communications via electronic mail.

On the other hand, methods of constructing a social network from a flow of information in an electronic bulletin board, electronic mail, a blog (weblog), or the like have been proposed.

For instance, Patent Document 4 discloses a method of analyzing a distribution channel of advertising contents by extracting an opinion leader through calculation of an introduction score, which indicates a scale of introduction of the advertising contents made to other users along the distribution channel of the advertising contents.

Non-patent Document 3 discloses a method of extracting a person's information influence from a comment reply relation (comment chain) on an electronic bulletin board.

Non-patent Document 4 discloses a method of analyzing a flow of information from an appearance timing of a uniform resource locator (URL) on a blog (weblog).

Patent Document 1: JP 2007-052557 A

Patent Document 2: JP 2001-273455 A

Patent Document 3: JP 11-265369 A

Patent Document 4: JP 2004-171042 A

Non-patent Document 1: Matsuo, Hamasaki, "Social Network Mining and Artificial Intelligence", The 20th Annual Conference of the Japanese Society for Artificial Intelligence, 2006

Non-patent Document 2: Tyler, Wilkinson, Huberman, "Email as spectroscopy: Automated discovery of community structure within organization", Proceedings of the International conference on communities and technologies

Non-patent Document 3: Matsumura, Osawa, Ishizuka, "A Model of Influence Propagation in Text Communication", Journal of the Japanese Society for Artificial Intelligence, vol. 17, no. 3, 2002

Non-patent Document 4: Adar, Adamic, "Implicit structure and the dynamics of blogspace", the 13th International World Wide Web Conference

Disclosure of the Invention

Problem to be solved by the Invention

The present invention has been made in view of the background described above, and it is therefore an object of the present invention to provide an information diffusion analysis system, an information diffusion analysis server, and an information diffusion analysis method with which information influence is calculated.

Means for solving the Problem

In order to achieve the above-mentioned object, the present invention provides an information diffusion analysis system, including: a plurality of user clients; an information providing device for storing a plurality of pieces of message information received from the plurality of user clients and providing the plurality of pieces of message information to a network; and an information diffusion analysis server, the plurality of user clients, the information providing device, and the information diffusion analysis server being interconnected via the network, in which the information diffusion analysis server includes: information relation analyzing means for acquiring the plurality of pieces of message information from the information providing device and analyzing a relation among the plurality of pieces of message information; message influence calculating means for calculating, based on the relation among the plurality of pieces of message information, for each of the plurality of pieces of message information, an information influence with respect to another piece of the plurality of pieces of message information; inter-user influence degree calculating means for calculating, based on the calculated influence, an information influence degree among users of the plurality of user clients that have sent the plurality of pieces of message information; user relation selecting means for checking a plurality of the calculated information influence degrees among the users to select at least one user pair that has an information influence degree among the users larger than a predetermined value; and group constructing means for constructing a predetermined group based on the at least one selected user pair.

The present invention also provides an information diffusion analysis server interconnected via a network with a plurality of user clients and an information providing device for storing a plurality of pieces of message information received from the plurality of user clients and providing the plurality of pieces of message information to the network, including: information relation analyzing means for acquiring the plurality of pieces of message information from the information providing device and analyzing a relation among the plurality of pieces of message information; message influence calculating means for calculating, based on the relation among the plurality of pieces of message information, for each of the plurality of pieces of message information, an information influence with respect to another piece of the plurality of pieces of message information; inter-user influence degree calculating means for calculating, based on the calculated influence, an information influence degree among users of the plurality of user clients that have sent the plurality of pieces of message information; user relation selecting means for checking a plurality of the calculated information influence degrees among the users to select at least one user pair that has an information influence degree among the users larger than a predetermined value; and group constructing means for constructing a predetermined group based on the at least one selected user pair.

The present invention also provides an information diffusion analysis method performed among a plurality of user clients, an information providing device for storing a plurality of pieces of message information received from the plurality of user clients and providing the plurality of pieces of message information to a network, and an information diffusion analysis server, the plurality of user clients, the information providing device, and the information diffusion analysis server being interconnected via the network, the information diffusion analysis method including: an information relation analyzing step of acquiring the plurality of pieces of message information from the information providing device and analyzing a relation among the plurality of pieces of message information; a message influence calculating step of calculating, based on the relation among the plurality of pieces of message information, for each of the plurality of pieces of message information, an information influence with respect to another piece of the plurality of pieces of message information; an inter-user influence degree calculating step of calculating, based on the calculated influence, an information influence degree among users of the plurality of user clients that have sent the plurality of pieces of message information; a user relation selecting step of checking a plurality of the calculated information influence degrees among the users to select at least one user pair that has an information influence degree among the users larger than a predetermined value; and a group constructing step of constructing a predetermined group based on the at least one selected user pair.

The present invention also provides an information diffusion analysis program executed among a plurality of user clients, an information providing device for storing a plurality of pieces of message information received from the plurality of user clients and providing the plurality of pieces of message information to a network, and an information diffusion analysis server, the plurality of user clients, the information providing device, and the information diffusion analysis server being interconnected via the network, the information diffusion analysis program causing a computer to execute: an information relation analyzing step of acquiring the plurality of pieces of message information from the information providing device and analyzing a relation among the plurality of pieces of message information; a message influence calculating step of calculating, based on the relation among the plurality of pieces of message information, for each of the plurality of pieces of message information, an information influence with respect to another piece of the plurality of pieces of message information; an inter-user influence degree calculating step of calculating, based on the calculated influence, an information influence degree among users of the plurality of user clients that have sent the plurality of pieces of message information; a user relation selecting step of checking a plurality of the calculated information influence degrees among the users to select at least one user pair that has an information influence degree among the users larger than a predetermined value; and a group constructing step of constructing a predetermined group based on the at least one selected user pair.

Effect of the Invention

According to the present invention, it is possible to provide the information diffusion analysis system, the information diffusion analysis server, and the information diffusion analysis method with which information influence is calculated.

Brief Description of the Drawings

[Figure 1] A diagram exemplifying a configuration of an information diffusion analysis system according to an embodiment of the present invention.
[Figure 2] A diagram exemplifying a message chain structure and a mode of information diffusion.
[Figure 3] A diagram exemplifying a hardware configuration of user clients, a web server, and an information diffusion analysis server which are illustrated in Figure 1.
[Figure 4] A diagram illustrating a configuration of a user client program which is executed in the user clients illustrated in Figure 1.
[Figure 5] A diagram illustrating a configuration of a web server program which is executed in the web server illustrated in Figure 1.
[Figure 6] A diagram exemplifying a structure of message information.
[Figure 7] A diagram illustrating a configuration of an information diffusion analysis program which is executed in the information diffusion analysis server illustrated in Figure 1.
[Figure 8] A diagram illustrating a configuration of a message chain structure analysis part which is illustrated in Figure 7.
[Figure 9] A flow chart illustrating a process of a message information analysis part.
[Figure 10] A flow chart illustrating the process of the message information analysis part.
[Figure 11] A diagram exemplifying a structure of chain structure information.
[Figure 12] A diagram illustrating a configuration of a message influence analysis part which is illustrated in Figure 7.
[Figure 13] A flow chart illustrating a process of a message influence calculation part.
[Figure 14] A diagram exemplifying a structure of message influence information which is created by the message influence analysis part.
[Figure 15] A diagram illustrating a configuration of a member relation analysis part which is illustrated in Figure 7.
[Figure 16] A flow chart illustrating a process of an inter-member influence degree calculation part.
[Figure 17] A diagram exemplifying a structure of inter-member influence degree information which is created by a message influence degree calculation part.
[Figure 18] A diagram exemplifying a member relation.
[Figure 19] A diagram illustrating a group relation built from the member relation exemplified in Figure 18.
[Figure 20] A diagram illustrating a configuration of an influencer analysis part which is illustrated in Figure 7.
[Figure 21] A flow chart illustrating a process of a member influence calculation part.
[Figure 22] A diagram exemplifying a structure of member influence information which is created by the member influence calculation part.
[Figures 23] Diagrams exemplifying a message chain structure and analysis results in this embodiment.
[Figures 24] Diagrams exemplifying the message chain structure and the analysis results in this embodiment.
[Figures 25] Diagrams exemplifying the message chain structure and the analysis results in this embodiment.
[Figure 26] A communication sequence diagram illustrating the overall operation of the information diffusion analysis system illustrated in Figure 1.

Best Mode for carrying out the Invention

[Background of the Invention]

To aid the understanding of the present invention, the background leading to the making of the present invention is described first.
Social networks are constantly formed from everyday life and are ever changing. In recent years, large-scale community spots such as a social networking service (SNS) have been provided on the Internet.

Participants of the large-scale community spots on the Internet use electronic mail, bulletin board systems (BBSs), blogs, or the like to talk about matters of their interest and transmit information related to those matters, and the information is made public on the Internet.

Hundreds and thousands of people may access the information and express sympathy or an opinion to the transmitter. If those people introduce the information to their acquaintances, the circle of connected people may be increased more and more, with the result that a social network wider in extent than the conventional face-to-face relation is readily formed. With regard to the social networks and communities described above, techniques of finding a community that already exists on the Internet and a structure of a social network in the community have lately been proposed.

Techniques of constructing a social network from the flow of information within an information community have also been proposed.

Problems of the techniques mentioned above are described below.

The aforementioned methods of finding a social network are not for a model that takes information diffusion into consideration.

For instance, while the technique mentioned above assumes that there is an interpersonal relation between persons whose names appear on a content and between the owners of contents where the same person's name appears, it is not always the case that information flows between these persons. Accordingly, an interpersonal relation that involves information sharing is not reflected accurately and no relation may be extracted when a common name does not appear. The technique for a social network that is built from organization relations or positional relations within a company is not capable of extracting a relation that is not expressed in the form of organization.

With the technique related to analyzing a mail network, a relation between persons who exchange information firsthand through electronic mail is reflected, but the technique falls short of taking into consideration secondhand information diffusion, such as the further traveling of the information to another person, as well.

The methods of analyzing the flow of information take into consideration the flow of information from person to person through communications. However, an implicit information flow which occurs when a third party refers to information made open in a public communication spot such as a bulletin board is not reflected.

Also, while the flow of information through reference may be analyzed from the appearance timing of the URL, the methods may not handle the flow of information in cases where a URL hardly appears, as in comments on a bulletin board.

An information diffusion analysis system 1 described below is configured to solve the problems stated above.

[Information Diffusion Analysis System]

An embodiment of the present invention is described below.

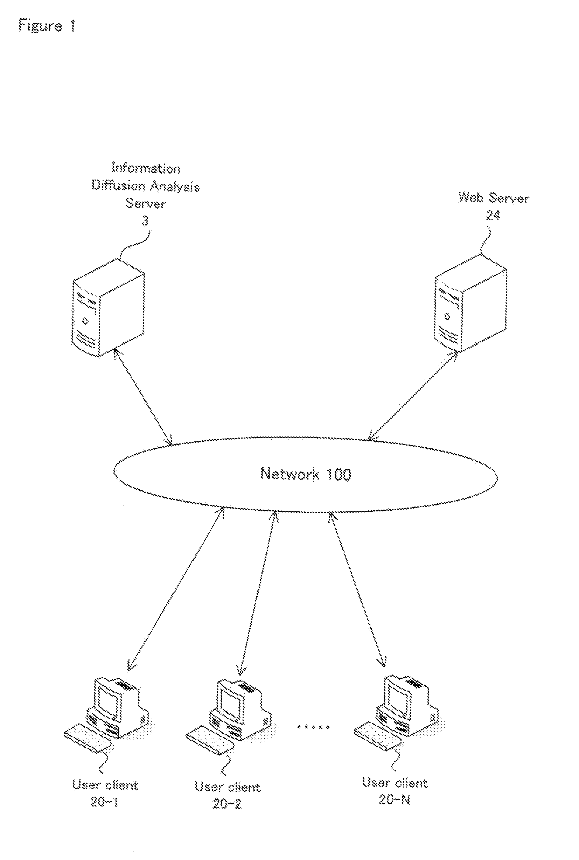

Figure 1 is a diagram exemplifying a configuration of the information diffusion analysis system 1 according to the embodiment of the present invention.

As illustrated in Figure 1, the information diffusion analysis system 1 is constituted by connecting user clients 20-1 to 20-N (N is an integer equal to or larger than 2. N may not always be the same number.), which are PCs or the like, a web server 24, and an information diffusion analysis server 3 via a network 100.

In the following description, an abbreviation such as "user client 20" may be used to refer to any one of a plurality of components without specifying one of the user clients 20-1 to 20-N.

Also, devices in the information diffusion analysis system 1 that may take an active role in information processing and communication, such as the information diffusion analysis server 3, may be referred collectively to as nodes in the following description.

Arbitrary two of the devices or more that constitute the information diffusion analysis system 1 illustrated in Figure 1 may appropriately be configured integrally.

There may be a plurality of information diffusion analysis servers 3 and a plurality of web servers 24.

Throughout the drawings referred to below, practically identical components and processes are denoted by the same numbers.

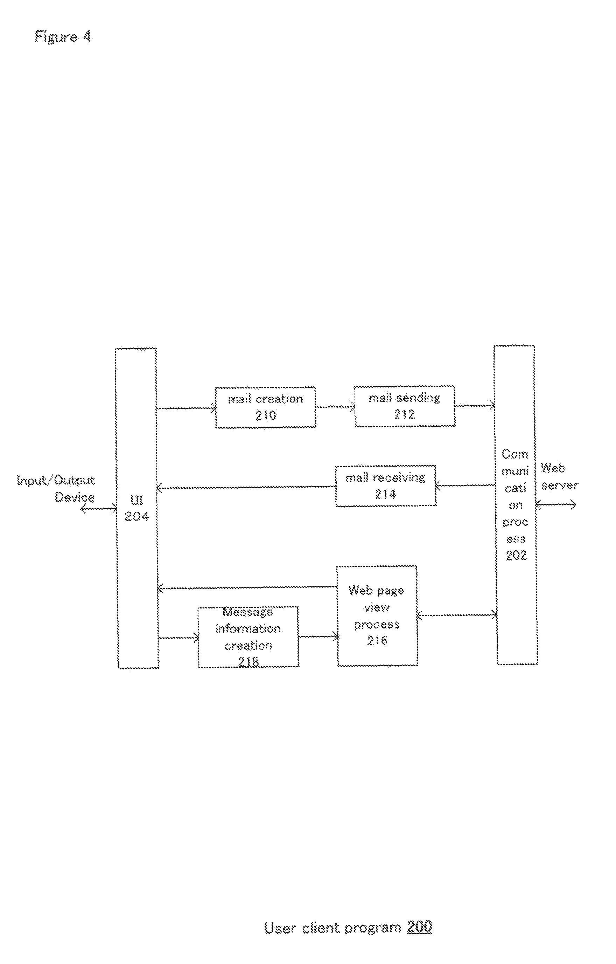

The user client 20, as is described later with reference to Figure 4, creates electronic mail to send the electronic mail to the network 100 and also receives electronic mail from the network 100.

The user client 20 sends to the web server 24 message information that a user wishes to be made public on an electronic bulletin board or the like via the network 100.

The user client 20, which is a PC in this embodiment, may instead be a cellular phone or a personal digital assistant (PDA), for example.

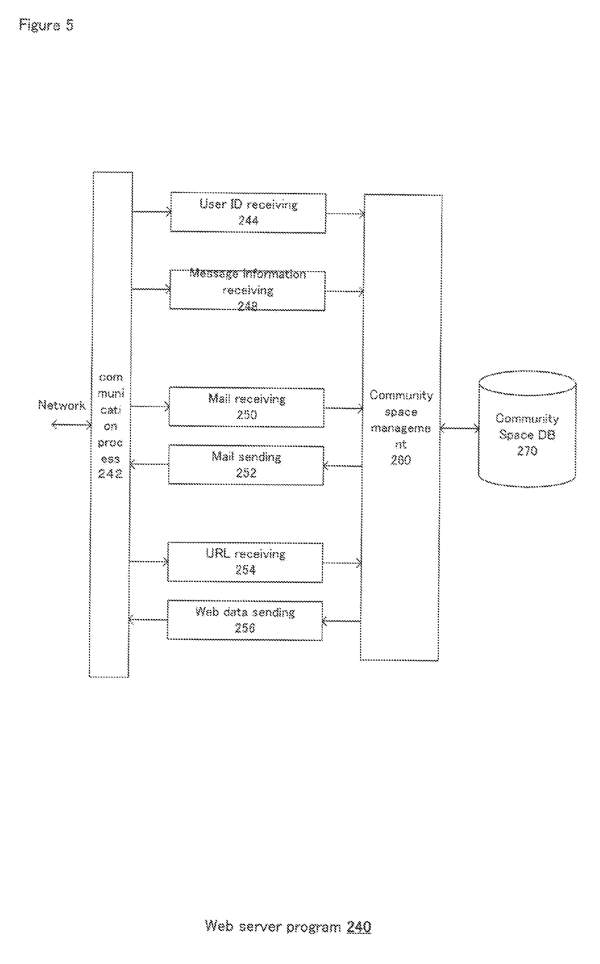

The web server 24, as is described later with reference to Figure 5, stores message information from the user client 20.

The web server 24 provides the stored message information to nodes connected to the network 100, thereby making information such as a web page public.

The web server 24 also manages a virtual spot where a plurality of users of the user clients 20 have a discussion or interact with one another through an exchange of messages among the users or other measures.

"Virtual spots" are, for example, social networking services (SNSs), blogs, bulletin board systems (BBSs), mailing lists, or the like. These are herein collectively referred to as community spaces.

Virtual communities formed via the community spaces are herein referred to as communities or information communities.

Participants of a community (i.e., users constituting a community) are herein referred to as community members, or simply referred to as members.

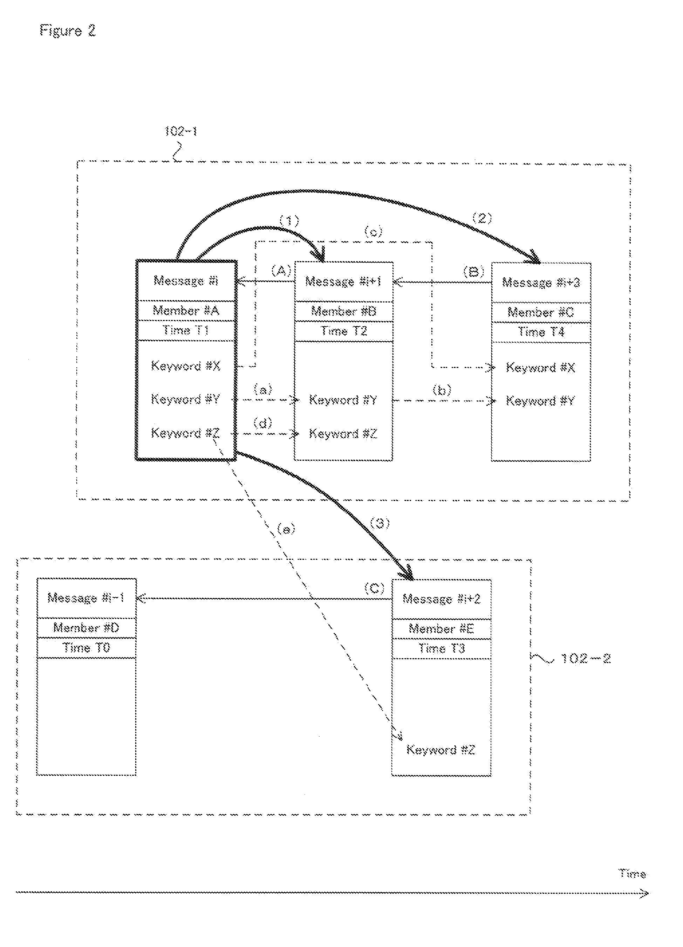

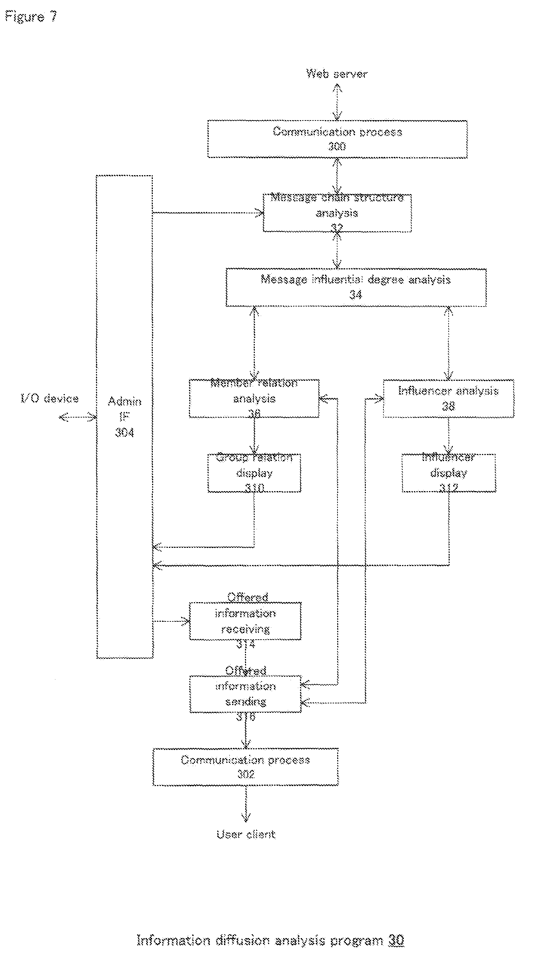

The information diffusion analysis server 3, as is described later with reference to Figure 7 and other drawings, analyzes the relation among a plurality of pieces of message information exchanged within a community space that is managed by the web server 24, and creates information about a message chain structure exemplified in Figure 2.

Based on the message chain structure, the information diffusion analysis server 3 calculates for each piece of message information the information influence (message influence) with respect to another piece of message information.

Based on the message influence, the information diffusion analysis server 3 calculates the information influence degree between members who belong to a community.

Based on the inter-member information diffusion influence degree, the information diffusion analysis server 3 constructs a social network from a group throughout which information tends to diffuse.

The information diffusion analysis server 3 also calculates the influence of each member over other members, and selects a member who has the greatest influence as an influencer.

An influencer is a person who has a strong influence on topics and opinions in a social network, and is also referred to as an opinion leader or an opinion maker.

The information diffusion analysis server 3 provides information such as advertisements to, for example, the user client 20 of the influencer.

The message chain structure and information diffusion are described.

Figure 2 is a diagram exemplifying the message chain structure and a mode of information diffusion.

The assumption of the example of Figure 2 is that, in a community space such as an electronic bulletin board, messages #i, #i+1, #i+2, #i+3, and #i-1 are open to public via the network 100.

The message #i is created by a member #A at a time T1, and contains keywords #X, #Y, and #Z.

The message #i+1 is created by a member #B at a time T2, and contains keywords #Y and #Z.

The message #i+2 is created by a member #E at a time T3, and contains keyword #Z.

The message #i+3 is created by a member #C at a time T4, and contains keywords #X and #Y.

The message #i-1 is created by a member #D at a time T0.

The message #i+1 is a reply message to the message #i as indicated by an arrow (A).

The message #i+3 is a reply message to the message #i+1 as indicated by an arrow (B).

The message #i+2 is a reply message to the message #i-1 as indicated by an arrow (C).

In Figure 2, a message on the right side is created later than a message on the left side, and T0 < T1 < T2 < T3 < T4 is satisfied.

The messages #i, #i+1, and #i+3 are in a reply relation with one another, and the reply relation connects the messages from #i to #i+3 via #i+1.

A reply relation is a relation indicating which message information is a reply to which message information or, conversely, from which message a message receives a reply.

The messages #i-1 and #i+2 are also in a reply relation with one another, and the reply relation connects the messages from #i-1 to #i+2.

A connection between messages linked by a reply relation as this is referred to as a message chain structure.

For example, in the example of Figure 2, the messages #i, #i+1, and #i+3 constitute a message chain structure 102-1, and the messages #i-1 and #i+2 constitute a message chain structure 102-2.

A mode in which information diffuses from the message #i to other messages is described next with reference to Figure 2.

The keyword #Y contained in the message #i is also contained in the message #i+1, which is a reply message to the message #i.

It may therefore be said that the keyword #Y has been diffused from the message #i to the message #i+1 as indicated by an arrow (a).

The keyword #Y is further contained in the message #i+3, which is a reply message to the message #i+1.

It may therefore be said that the keyword #Y has been diffused from the message #i+1 to the message #i+3 as indicated by an arrow (b).

It may also be said that the keyword #Y, which has been diffused from the message #i via the message #i+1 to the message #i+3, has been diffused from the message #i to the message #i+3.

The keyword #X contained in the message #i is also contained in the message #i+3.

The message #i+3 is not a reply message to the message #i, but the message #i+3 and the message #i are contained in the same message chain structure 102-1.

It may therefore be estimated that the member #C who has created the message #3 has been inspired by the message #i to create the message #i+3.

In other words, the keyword #X may be said to have been diffused from the message #i to the message #i+3 skipping the message #i+1 as indicated by an arrow (c).

The keyword #Z contained in the message #i is also contained in the message #i+1, which is a reply message to the message #i.

It may therefore be said that the keyword #Z has been diffused from the message #i to the message #i+1 as indicated by an arrow (d).

The keyword #Z is further contained in the message #i+2.

The message #i+2 is not contained in the same message chain structure as that of the message #i which is the message chain structure 102-1.

However, because the message #i+2 has been created later than the message #i, if the time difference between the time T1 and the time T3 is small, it may be estimated that the member #E who has created the message #i+2 has been inspired by the message #i to create the message #i+2.

The keyword #Z may therefore be said to have been diffused from the message #i to the message #i+2 as indicated by an arrow (e).

From the above, it may be said that information (the keywords #X, #Y, and #Z in this example) has been diffused from the message #i to the messages #i+1, #i+3, and #i+2 as indicated by arrows (1), (2), and (3).

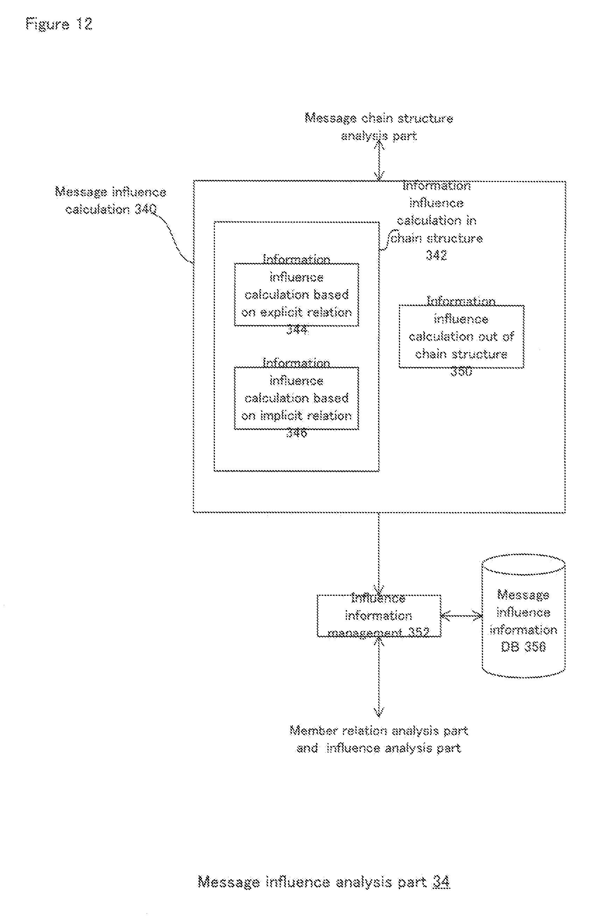

The information influence which varies among information diffusion routes indicated by the arrows (1), (2), and (3) is calculated by a method described later with reference to Figure 12 and other drawings.

[Hardware]

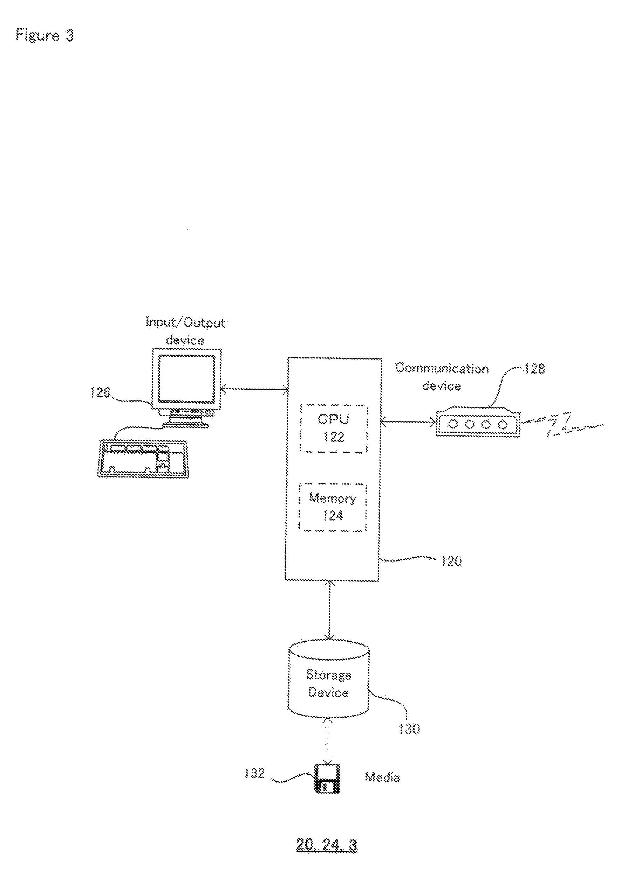

Figure 3 is a diagram exemplifying a hardware configuration of the user client 20, the web server 24, and the information diffusion analysis server 3 illustrated in Figure 1.

As illustrated in Figure 3, the user client 20, the web server 24, and the information diffusion analysis server 3 each include a main body 120, which contains among others a CPU 122 and a memory 124, an I/O device 126, which includes among others a keyboard and a display, a communication device 128, which communicates with other nodes, and a storage device 130 such as a CD device and an HDD device which records and reproduces data on a storage medium 132.

In short, the user client 20, the web server 24, and the information diffusion analysis server 3 each include hardware components as a computer capable of information processing and communication with other nodes.

[User Client Program]

Figure 4 is a diagram illustrating a configuration of a user client program 200, which is executed in the user client 20 illustrated in Figure 1.

As illustrated in Figure 4, the user client program 200 includes a communication process part 202, a user interface (UI) 204, a mail creation part 210, a mail sending part 212, a mail receiving part 214, a web page viewing process part 216, and a message information creation part 218.

For example, the user client program 200 is supplied to the user client 20 via the network 100 or via the storage medium 132, loaded onto the memory 124, installed in the user client 20, and then executed on an OS to be executed (not shown) with the use of specific hardware resources of the user client 20 (the same applies to each program described later).

In the user client program 200, the communication process part 202 performs control for communication with other processing nodes.

The UI 204 accepts manipulations of the I/O device 126 by a user and outputs data that indicates the accepted manipulations to the mail creation part 210 and the message information creation part 218.

The UI 204 controls processes of other components of the user client program 200 in response to manipulations by the user.

The mail creation part 210 accepts the data that indicates the user's manipulations from the UI 204 to create electronic mail, and outputs the created electronic mail information to the mail sending part 212.

The mail sending part 212 sends the electronic mail created in response to the user's manipulations via the communication process part 202 and the network 100 to a node that is indicated by a destination address contained in the electronic mail.

The mail receiving part 214 receives the electronic mail via the network 100 and the communication process part 202, and outputs this electronic mail to the UI 204.

The UI 204 displays the electronic mail information received from the mail receiving part 214 on the I/O device 126.

The web page viewing process part 216, which is, for example, a web browser, performs a process for viewing a web page or other information that has been made public by the web server 24 or others, and outputs the processed information to the UI 204.

The web page viewing process part 216 sends a URL of a web page to the corresponding web server 24, and receives information such as web data corresponding to this URL from this web server 24.

The UI 204 displays the information from the web page viewing process part 216 on the I/O device 126.

Upon input of data that indicates manipulations by a user from the UI 204, the message information creation part 218 creates message information which is made public by the web server 24 or others, and outputs the created message information to the web page viewing process part 216.

The web page viewing process part 216 sends the message information from the message information creation part 218 via the communication process part 202 and the network 100 to a node that is indicated by a destination address contained in the message information.

[Web Server Program]

Figure 5 is a diagram illustrating a configuration of a web server program 240, which is executed in the web server 24 illustrated in Figure 1.

As illustrated in Figure 5, the web server program 240 includes a communication process part 242, a user ID receiving part 244, a message information receiving part 248, a mail receiving part 250, a mail sending part 252, a URL receiving part 254, a web data sending part 256, a community space management part 260, and a community space database (DB) 270.

In the web server program 240, the communication process part 242 performs control for communication with other processing nodes.

When electronic mail and message information are received from the user client 20 via the network 100 and the communication process part 242, or on other occasions, the user ID receiving part 244 receives an identifier (user ID) such as an electronic mail address or an IP address from this user client 20.

The user ID receiving part 244 outputs the received user ID to the community space management part 260.

The community space management part 260 performs a process for providing, as web data, a service that uses a community space such as an electronic bulletin board to nodes connected to the network 100.

The community space management part 260 manages information relevant to a community space, such as message information.

The community space management part 260 performs user authentication and other processes based on a user ID from the user ID receiving part 244.

The community space management part 260 may provide a service that uses a community space only to the user client 20 of a user who has successfully been authenticated by this authentication process.

The message information receiving part 248 receives the message information from the user client 20, via the network 100 and the communication process part 242.

The message information receiving part 248 outputs the received message information to the community space management part 260.

The community space management part 260 stores the message information from the message information receiving part 248 in the community space DB 270, and manages I/O and the like of the information.

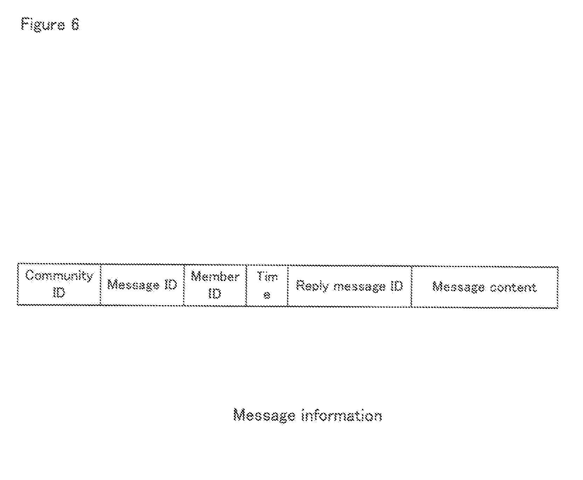

Figure 6 is a diagram exemplifying a structure of message information.

As illustrated in Figure 6, message information contains an identifier of a community (community ID), an identifier of the message (message ID), an identifier of a member who has created the message information (member ID), time information indicating the time of creation of the message information, an identifier of message information to which this message information is a reply (original message ID), and message content information.

The community ID may be associated with, for example, a URL.

"Message information to which this message information is a reply" is, when a message A is a reply to a message B, for example, message information of the message B.

In this case, the original message ID contained in message information about the message A is the message ID of the message B.

When a message in question is not a reply message to any messages, the original message ID is not contained in its message information.

In the example of Figure 2, message information about the message #i+1 contains the identifier of the message #i as the original message ID, whereas message information about the message #i does not contain the original message ID.

The message content information contains, for example, data posted to an electronic bulletin board or data constituting a blog or the like, and may be text data or may contain image data or the like.

The mail receiving part 250 (Figure 5) receives electronic mail from the user client 20 via the network 100 and the communication process part 242.

The mail receiving part 250 outputs the received electronic mail to the community space management part 260.

Based on the electronic mail from the mail receiving part 250, the community space management part 260 performs a predetermined process for managing a community space.

When necessary, the community space management part 260 automatically creates, or an administrator thereof manually creates, electronic mail to be sent to the user client 20 of a member, and outputs the created electronic mail to the mail sending part 252.

The mail sending part 252 sends the electronic mail that is created by the community space management part 260 and addressed to one user client 20 to this user client 20 via the communication process part 242 and the network 100.

The URL receiving part 254 receives a URL via the communication process part 242 from a node connected to the network 100, and outputs the URL to the community space management part 260.

The community space management part 260 outputs to the web data sending part 256 web data corresponding to the URL from the URL receiving part 254.

The web data sending part 256 sends the web data from the community space management part 260 via the communication process part 242 and the network 100 to the node that has sent the URL.

Message information may be created from electronic mail.

In this case, the message information receiving part 248 and the mail receiving part 250 may be the same component.

Also, the mail sending part 252 in this case may perform a process of forwarding electronic mail received by the mail receiving part 250 to the user client 20 of every member who belongs to a community managed by the community space management part 260.

The original message ID contained in the message information that is illustrated in Figure 6 may be attached to the message information by a component in the user client program 200 (for example, the message information creation part 218), or may be attached to the message information by a component in the web server program 240 (for example, the community space management part 260).

[Information Diffusion Analysis Program]

Figure 7 is a diagram illustrating a configuration of an information diffusion analysis program 30, which is executed in the information diffusion analysis server 3 illustrated in Figure 1.

As illustrated in Figure 7, the information diffusion analysis program 30 includes communication process parts 300 and 302, an administrator interface (admin IF) 304, a message chain structure analysis part 32, a message influence analysis part 34, a member relation analysis part 36, an influencer analysis part 38, a group relation display part 310, an influencer display part 312, a provided information receiving part 314, and a provided information sending part 316.

In the information diffusion analysis program 30, the communication process part 300 performs control for communication with the web server 24 connected to the network 100.

The communication process part 302 performs control for communication with the user client 20 connected to the network 100.

The admin IF 304 responds to the manipulation of the I/O device 126 by a system administrator by outputting the identifier of an analysis target community (community ID) to the message chain structure analysis part 32.

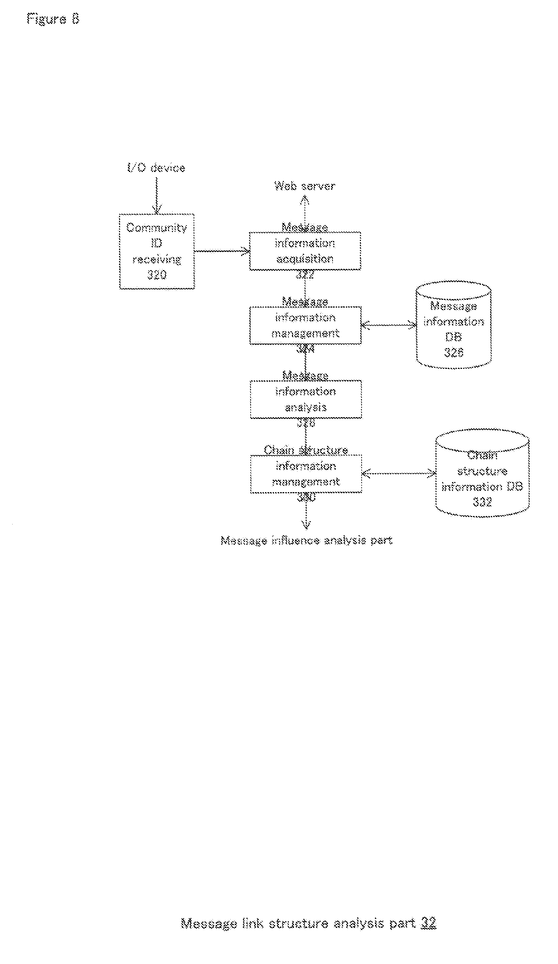

The message chain structure analysis part 32, as is described later with reference to Figure 8 and other drawings, analyzes a plurality of pieces of information exchanged within a community space that is indicated by the community ID from the admin IF 304, and the relation between the pieces of message information.

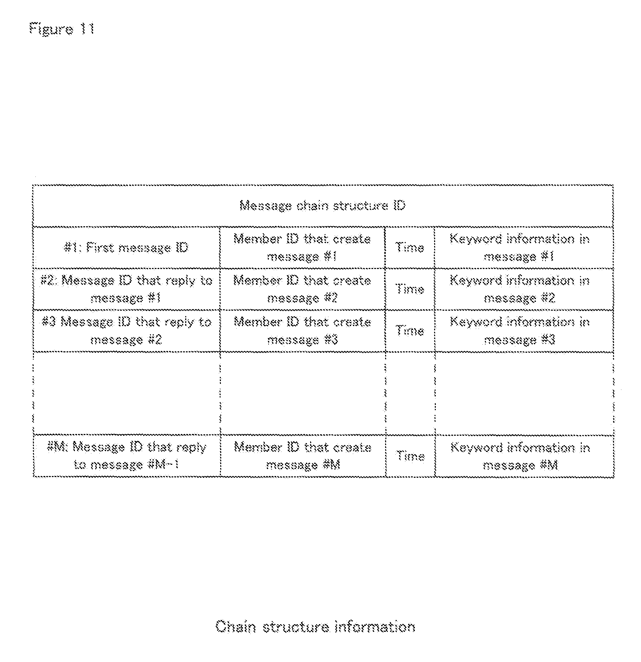

Through the analysis, the message chain structure analysis part 32 deduces a reply relation between messages and, based on the reply relation, creates chain structure information, which is described later with reference to Figure 11.

The message influence analysis part 34, as is described later with reference to Figure 12 and other drawings, uses the chain structure information to calculate for each piece of message information information influence (message influence) with respect to another piece of message information.

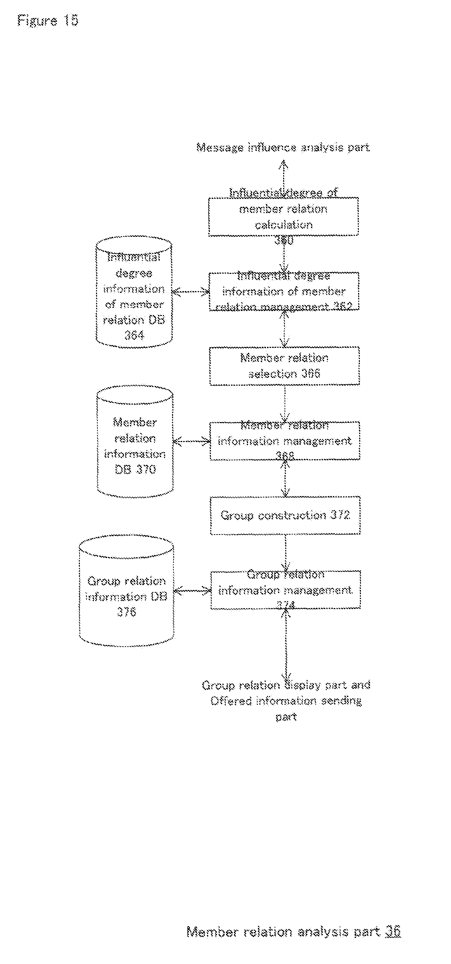

The member relation analysis part 36, as is described later with reference to Figure 15 and other drawings, uses the calculated message influence to calculate the information influence degree between members who belong to a community (inter-member influence degree).

The member relation analysis part 36 uses the inter-member influence degree to construct a group throughout which information tends to be diffused, and outputs information of the group to the group relation display part 310.

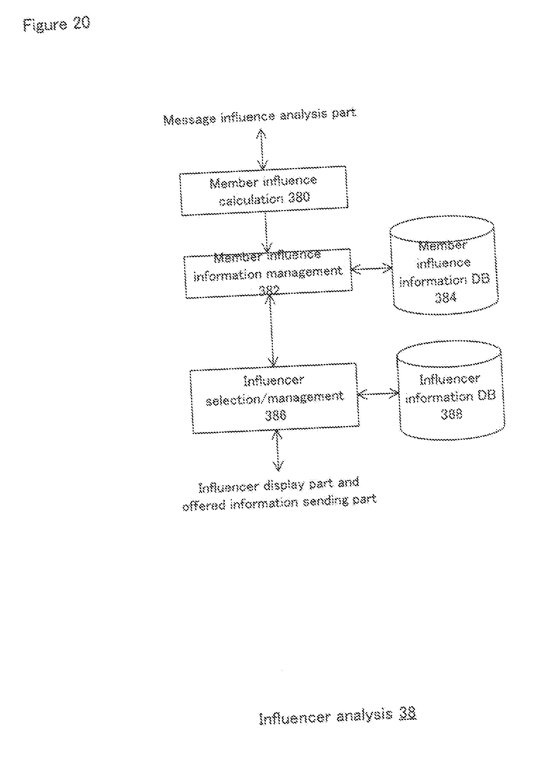

The influencer analysis part 38, as is described later with reference to Figure 20 and other drawings, calculates the influence of each member over other members.

The influencer analysis part 38 selects a member who has the greatest influence as an influencer, and outputs information of the influencer to the influencer display part 312.

The group relation display part 310 receives the group information from the member relation analysis part 36, performs a process for displaying the group information, and outputs the information to the admin IF 304.

The influencer display part 312 receives the influencer information from the influencer analysis part 38, performs a process for displaying the influencer information, and outputs the information to the admin IF 304.

The admin IF 304 displays the group information from the group relation display part 310 and the influencer information from the influencer display part 312 on the I/O device 126.

The admin IF 304 outputs advertisements or other provided information created through the manipulation of the I/O device 126 by the system administrator to the provided information receiving part 314.

The provided information receiving part 314 receives the provided information from the admin IF 304 and outputs the information to the provided information sending part 316.

The provided information sending part 316 receives the provided information from the provided information receiving part 314.

The provided information sending part 316 receives information of a group from the member relation analysis part 36 and information of an influencer from the influencer analysis part 38.

From the received group information, the provided information sending part 316 selects a group in which the received provided information is to be propagated.

The provided information sending part 316 extracts information of an influencer who is relevant to the selected group, and sends the provided information to the user client 20 that is associated with the identifier of this influencer.

Instead of sending the provided information to the user client 20 directly from the provided information sending part 316, the provided information sending part 316 may send the provided information to the web server 24, so that the provided information is sent to the user client 20 of the influencer from the web server 24.

Alternatively, the provided information sending part 316 may send the provided information to the user client 20 of every member who belong to the group based on the received group information, or may send the provided information to the user client 20 of every influencer associated with the received influencer information.

The provided information sending part 316 may not depend on the group information and the influencer information in sending the provided information.

Specifically, the administrator may check on the I/O device 126 what is displayed through the processes by the group relation display part 310 and the influencer display part 312, so that the administrator himself/herself determine to which influencer the provided information is to be sent, and sends the provided information to the user client 20 of this influencer.

Figure 8 is a diagram illustrating a configuration of the message chain structure analysis part 32 illustrated in Figure 7.

As illustrated in Figure 8, the message chain structure analysis part 32 includes a community ID receiving part 320, a message information acquisition part 322, a message information management part 324, a message information DB 326, a message information analysis part 328, a chain structure information management part 330, and a chain structure information DB 332.

In the message chain structure analysis part 32, the community ID receiving part 320 receives a community ID from the I/O device 126 via the admin IF 304, and outputs the community ID to the message information acquisition part 322.

The message information acquisition part 322 receives the community ID from the community ID receiving part 320.

The message information acquisition part 322 request the web server 24 that is associated with a community space indicated by the community ID to send information of a web page that contains message information.

Receiving the information of the web page from the web server 24, the message information acquisition part 322 extracts from the web page a plurality of pieces of message information as the one illustrated in Figure 6, and outputs the message information to the message information management part 324.

The message information management part 324 stores the pieces of message information from the message information acquisition part 322 in the message information DB 326, and manages I/O and the like of the information.

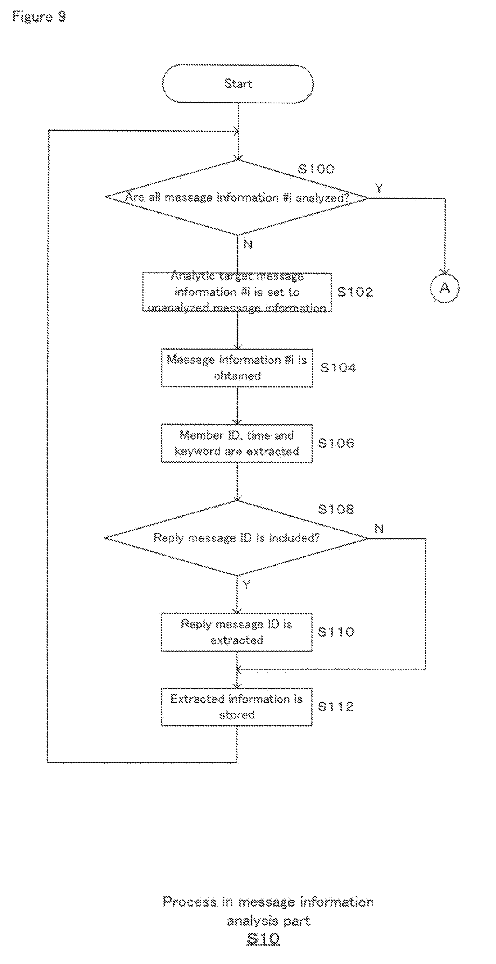

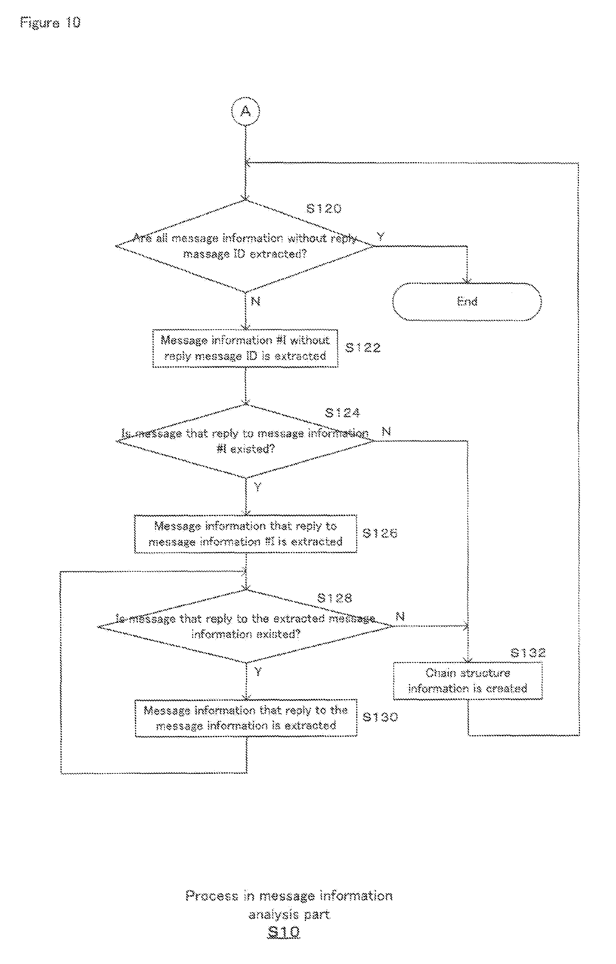

The message information analysis part 328 acquires message information from the message information management part 324, and performs a process that is described later with reference to Figures 9 and 10 to create chain structure information.

The message information analysis part 328 outputs the created chain structure information to the chain structure information management part 330.

The chain structure information management part 330 stores the chain structure information created by the message information analysis part 328 in the chain structure information DB 332, and manages I/O of the information.

Figures 9 and 10 are flow charts illustrating the process (S10) of the message information analysis part 328.

As illustrated in Figure 9, in Step 100 (S100), the message information analysis part 328 determines whether or not every piece of message information #i has been analyzed, and proceeds to S110 illustrated in Figure 10 if it has been and otherwise proceeds to S102.

In Step 102 (S102), the message information analysis part 328 sets the message information #i that is an analysis target as unanalyzed message information.

In Step 104 (S104), the message information analysis part 328 acquires the message information #i from the message information management part 324.

In Step 106 (S106), the message information analysis part 328 extracts the member ID and the time information that are contained in the message information, and extracts keyword information from the message content information.

The extracted keyword information is text data in most cases, but may be image data.

In Step 108 (S108), the message information analysis part 328 determines whether or not the message information contains the identifier of a message to which this message is a reply (original message ID), and proceeds to S110 when the original message ID is contained and otherwise proceeds to S112.

In Step 110 (S110), the message information analysis part 328 extracts the original message ID from the message information.

In Step 112 (S112), the message information analysis part 328 stores the extracted information and returns to S100.

In Step 120 (S120) (Figure 10), the message information analysis part 328 determines whether or not every piece of message information without original message ID has been extracted from the information stored in S112, and ends the process when every piece of message information without original message ID has been extracted and otherwise returns to S122.

In Step 122 (S122), the message information analysis part 328 extracts from the information stored in S112 message information #I without no original message ID.

In Step 124 (S124), the message information analysis part 328 determines whether or not there is message information among the acquired message information that is a reply to the message information #I, and proceeds to S126 when there is any and otherwise proceeds to S132.

In Step 126 (S126), the message information analysis part 328 extracts the message information that is a reply to the message information #I.

In Step 128 (S128), the message information analysis part 328 determines whether or not there is message information that is a reply to the message information extracted in S126 or S130, and proceeds to S130 when there is any and otherwise proceeds to S132.

In Step 130 (S130), the message information analysis part 328 extracts from the information stored in S112 message information that is a reply to the message in question, and returns to S128.

In Step 132 (S132), the message information analysis part 328 uses the message information extracted in S122 to S130 to create chain structure information illustrated in Figure 11, and returns to S120.

The order of process steps illustrated in Figures 9 and 10 may be changed as seen fit.

The same applies to flow charts, sequences, and the like referred to below.

Figure 11 is a diagram exemplifying a structure of chain structure information.

As illustrated in Figure 11, chain structure information contains the identifier of a message chain structure (message chain structure ID), an identifier #1, which is the identifier of a message created first in this message chain structure, an identifier #2, which is the identifier of a message that is a reply to the message #1, an identifier #3, which is the identifier of a message that is a reply to the message #2, ..., an identifier #M (M is an integer equal to or larger than 2), which is the identifier of a message that is a reply to a message #M-1, the identifiers of members who have respectively created the messages, time information indicating the time of creation of each message, and keyword information contained in each piece of message information.

For example, in the message chain structure 102-1 of Figure 2, M is 3, the first created message ID #1 is #i, the message ID #2 is #i+1, and the message ID #3 is #i+3.

In other words, a message chain structure may be constructed based on the chain structure information.

Figure 12 is a diagram illustrating a configuration of the message influence analysis part 34 illustrated in Figure 7.

As illustrated in Figure 12, the message influence analysis part 34 includes a message influence calculation part 340, an influence information management part 352, and a message influence information DB 356.

The message influence calculation part 340 contains an information-influence-within-chain-structure calculation part 342 and an information-influence-outside-chain-structure calculation part 350.

The information-influence-within-chain-structure calculation part 342 contains an explicit relation-based information influence calculation part 344 and an implicit relation-based information influence calculation part 346

The message influence calculation part 340 acquires chain structure information from the message chain structure analysis part 32.

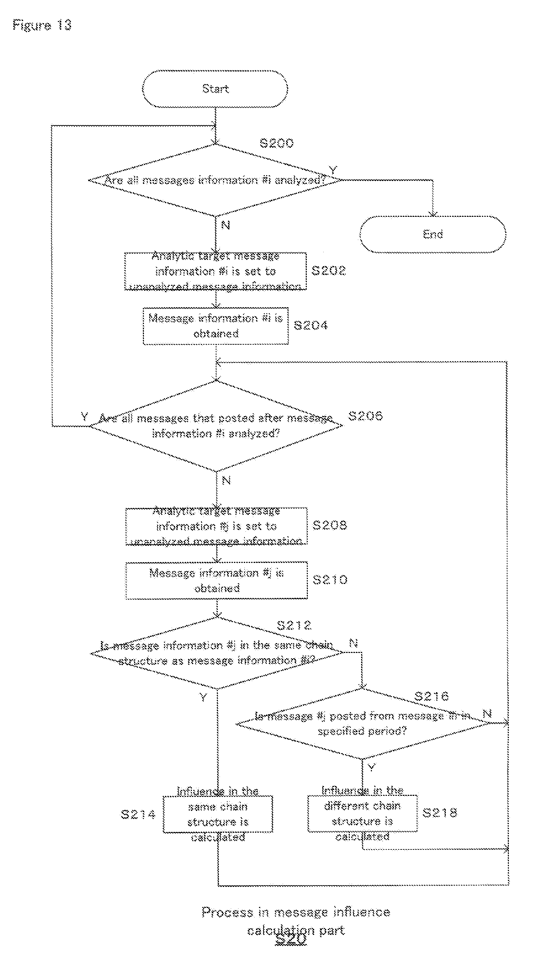

The message influence calculation part 340 uses the information-influence-within-chain-structure calculation part 342 and the information-influence-outside-chain-structure calculation part 350 to perform a process that is described later with reference to Figure 13.

As a result of this process, the message influence calculation part 340 calculates the message influence of each piece of message information with respect to every other piece of message information.

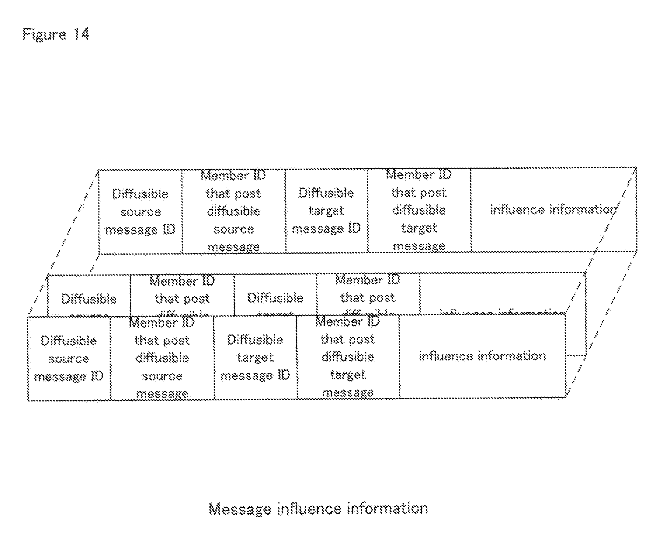

Based on the calculated message influence, the message influence calculation part 340 creates message influence information, which is described later with reference to Figure 14, and outputs the message influence information to the influence information management part 352.

The influence information management part 352 stores the received message influence information in the message influence information DB 356, and manages I/O of the information.

The information-influence-within-chain-structure calculation part 342 uses the explicit relation-based information influence calculation part 344 and the implicit relation-based information influence calculation part 346 to calculate for a piece of message information the information influence with respect to another piece of message information that is within the same message chain structure.

Of different types of information influence a piece of message information has with respect to another piece of message information that is in the same message chain structure, the explicit relation-based information influence calculation part 344 calculates the influence in information diffusion that occurs via other messages.

In the example of Figure 2, the explicit relation-based information influence calculation part 344 calculates the influence in information diffusion from the message #i to the message #i+3 via the message #i+1 along the routes indicated by the arrow (a) and the arrow (b).

Of different types of information influence a piece of message information has with respect to another piece of message information that is in the same message chain structure, the implicit relation-based information influence calculation part 346 calculates the influence in information diffusion that occurs without passing through any other message.

In the example of Figure 2, the implicit relation-based information influence calculation part 346 calculates the influence in direct information diffusion from the message #i to the message #i+3 along the route indicated by the arrow (c) which does not run through the message #i+1.

**The information**-influence-outside-chain-structure calculation part 350 calculates for a piece of message information the information influence with respect to another piece of message information that is not within the same message chain structure.

In the example of Figure 2, the information-influence-outside-chain-structure calculation part 350 calculates the influence in information diffusion from the message #i to the message #i+3 along the route indicated by the arrow (e).

Figure 13 is a flow charts illustrating the process (S20) of the message influence calculation part 340.

As illustrated in Figure 13, in Step 200 (S200), the message influence calculation part 340 determines whether or not every piece of message information #i has been analyzed, and ends the process if it has been and otherwise proceeds to S202.

In Step 202 (S202), the message influence calculation part 340 sets the message information #i that is an analysis target as unanalyzed message information.

In Step 204 (S204), the message influence calculation part 340 acquires the message information #i from the message chain structure analysis part 32.

In Step 206 (S206), the message influence calculation part 340 determines whether or not every piece of message information #j that has been posted after the message information #i has been analyzed, and proceeds to S200 if it has been and otherwise proceeds to S208.

In Step 208 (S208), the message influence calculation part 340 sets the message information #j that is an analysis target as unanalyzed message information.

In Step 210 (S210), the message influence calculation part 340 acquires the message information #j from the message chain structure analysis part 32.

In Step 212 (S212), the message influence calculation part 340 determines whether or not the message information #j is in the same message chain structure as the message information #i, and proceeds to S214 when it is and otherwise proceeds to S216.

In Step 214 (S214), the message influence calculation part 340 uses the information-influence-within-chain-structure calculation part 342 to calculate by the following mathematical expression the information influence with respect to message information that is in the same chain structure:

[Mathematical Expression 1]

$$I_{i,j} = I_{i,j-1} I'_{i,j} + \frac{1}{d_{i,j}} I''_{i,j}$$

In this expression, $I_{i,j}$ represents the message influence of the message #i with respect to the message #j.
$I'_{i,j}$ is calculated based on keywords that are diffused from the message #i to the message #j-1 via every message in the message chain structure and keywords that are contained in the message #j, and is expressed by the following expression:

[Mathematical Expression 2]

$$I'_{i,j} = \frac{\left| w_{i,j-1} \bigcap w_j \right|}{\left| w_{i,j-1} \right\| w_j \right|}$$

In this expression, $w_i$ represents the set of keywords contained in the message #i.
The set of keywords contained in every message in the message chain structure from the message #i to the message #j-1 is represented by $w_{i,\,j-1}$, and $w_{i,\,j-1}$ is expressed by the following expression:

[Mathematical Expression 3]

$$w_{i,j-1} = w_i \bigcap \cdots \bigcap w_{j-1}$$

In the example of Figure 2, when the explicit relation-based message influence of the message #i with respect to the message #i+3 is calculated (i.e., when j=i+3), the following are satisfied:

$$w_i = \{\#X, \#Y, \#Z\}, |w_i| = 3$$

$$w_j = \{\#X, \#Y\}, |w_j| = 2$$

$$w_{i,\,j-1} = \{\#Y, \#Z\}, |w_{i,\,j-1}| = 2$$

Also, the following are true:

$$w_{i,\,j-1} \cap w_j = \{\#Y\}$$

$$|w_{i,\,j-1} \cap w_j| = 1$$

Accordingly, $I'_{i,\,j}=1/(2\times2)=1/4$ is established in the above-mentioned example.
$I''_{i,j}$ is calculated based on other keywords than those diffused from the message #i to the message #j-1 through in-between messages and keywords contained in the message #j.
In other words, $I''_{i,j}$ is calculated based on keywords that are not diffused from the message #i to the message #j-1 through in-between messages and that are diffused from the message #i to the message #j, and is expressed by the following expression:

[Mathematical Expression 4]

$$I''_{i,j} = \frac{|\overline{w}_{i,j-1} \bigcap w_j|}{|\overline{w}_{i,j-1}\| w_j|}$$

In this expression, $\overline{w}_{i,\,j-1}$ is as follows:

[Mathematical Expression 5]

$$\overline{w}_{i,j-1} = w_i \setminus \left( w_{i+1} \bigcup \cdots \bigcup w_{j-1} \right)$$

In the example of Figure 2, when the implicit relation-based information influence of the message #i with respect to the message #i+3 is calculated (i.e., when j=i+3), the following is satisfied:

$$w_{i+1} \cup \cdots \cup w_{j-1} = \{\#Y, \ \#Z\}$$

The following are therefore satisfied:

[Mathematical Expression 6]

$$\overline{w}_{i,j-1} = \{\# X\}, \left|\overline{w}_{i,j-1}\right| = 1$$

[Mathematical Expression 7]

$$\overline{w}_{i,j-1} \bigcap w_j = \{\# X\}, \left|\overline{w}_{i,j-1} \bigcap w_j = 1\right|$$

Accordingly, $I''_{i,\,j}$=1/(1×2)=1/2 is established in the above-mentioned example.

A parameter that indicates the interval between the message #i and the message #j in the message chain structure is represented by $d_{i,\,j}$. For example, $d_{i,\,j}$ is the number of messages between the message #i and the message #j. In the example of Figure 2, when the message influence of the message #i with respect to the message #i+3 is calculated, $d_{i,\,j}$=2.

Also, because $I_{i,\,j-1}$=2/(3×2)=1/3, the message influence of the message #i with respect to the message #i+3 in the example of Figure 2 is as follows:

**14**

$$I_{i,\,j}=(1/3)*(1/4)+(1/2)*(1/2)=1/3$$

In Step 216 (S216), the message influence calculation part 340 determines whether or not the message information #j has been posted after a specified period of time elapses since the message information #i has been posted, and proceeds to S218 if it has been and otherwise proceeds to S206.

In Step 218 (S218), the message influence calculation part 340 uses the information-influence-outside-chain-structure calculation part 350 to calculate by the following mathematical expression the message influence with respect to a message that is in another chain structure:

[Mathematical Expression 8]

$$I_{i,j}=\frac{1}{D_{i,j}}\left(I_{i,j-1}I'_{i,j}+\frac{1}{d_{i,j}}I''_{i,j}\right)$$

A parameter that indicates the interval between the message #i and the message #j in the message chain structure is represented by $D_{i,\,j}$. For example, $D_{i,\,j}$ is the number of messages between the message #i and the message #j. In the example of Figure 2, when the message influence of the message #i with respect to the message #i+2 is calculated, $D_{i,\,j}$=3.

Also, the following are satisfied:

$$w_i=\{\#X,\ \#Y,\ \#Z\},\ |w_i|=3$$

$$w_j=\{\#Z\},\ |w_j|=1$$

$$w_i\cap w_j=\{\#Z\},\ |w_i\cap w_j|=1$$

Accordingly, $I'_{i,\,j}$=1/(3×1)=1/3 is established in the above-mentioned example.

The message influence of the message #i with respect to the message #i+2 in the example of Figure 2 is expressed as $I_{i,\,j}$=1/3×1/3=1/9.

Figure 14 is a diagram exemplifying a structure of message influence information which is created by the message influence analysis part 34.

As illustrated in Figure 14, message influence information contains an identifier of message information from which information is diffused (diffusion source message ID), an identifier of a member who has posted the diffusion source message (diffusion-source-message-posted-member ID), an identifier of message information to which the information is diffused (diffusion target message ID), an identifier of a member who has posted the diffusion target message (diffusion-target-message-posted-member ID), and influence information.

The message influence information is created for the information diffusion source message and the information diffusion target message each.

In the example of Figure 2, message influence information about the information diffusion from the message #i to the message #i+3 indicated by the arrow (2) has the identifier of the message #i as the diffusion source message ID, the identifier of the member #A as the diffusion-source-message-posted-member ID, the identifier of the message #i+3 as the diffusion target message ID, and the identifier of the member #C as the diffusion-target-message-posted-member ID.

Figure 15 is a diagram illustrating a configuration of the member relation analysis part 36 illustrated in Figure 7.

As illustrated in Figure 15, the member relation analysis part 36 includes an inter-member influence degree calculation part 360, an inter-member influence degree information management part 362, an inter-member influence degree information DB 364, a member relation selection part 366, a member relation information management part 368, a member relation information DB 370, a group construction part 372, a group relation information management part 374, and a group relation information DB 376.

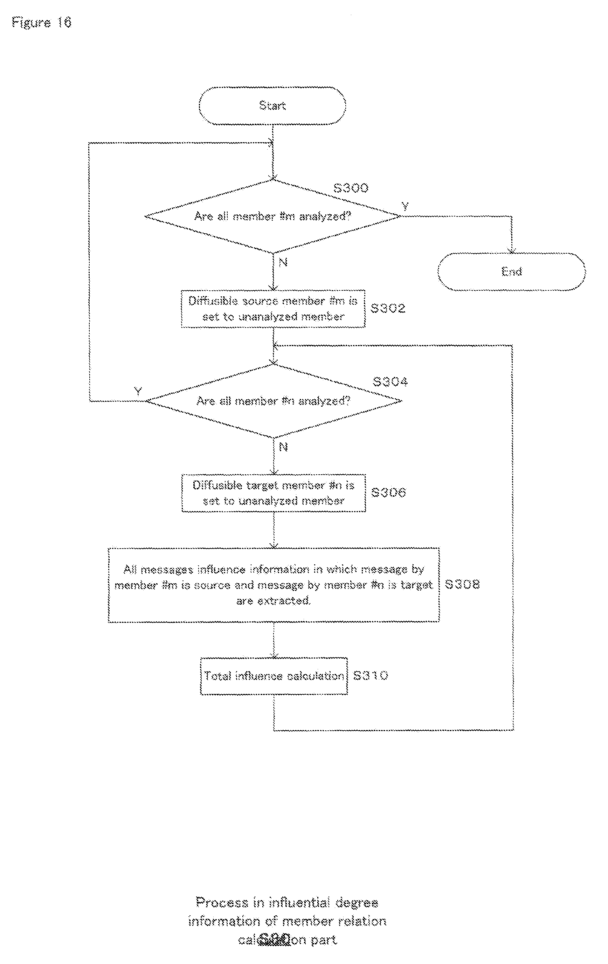

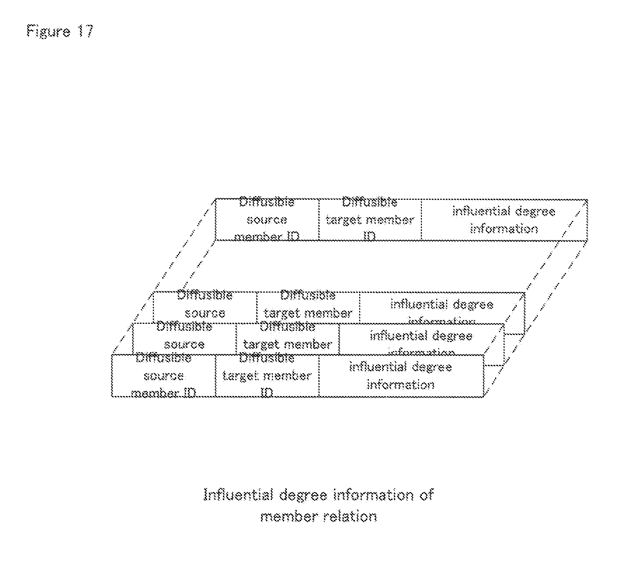

In the member relation analysis part 36, the inter-member influence degree calculation part 360 performs a process illustrated in Figure 16 to calculate the degree of influence between members, and creates inter-member influence degree information, which is described later with reference to Figure 17.

The inter-member influence degree calculation part 360 outputs the created inter-member influence degree information to the inter-member influence degree information management part 362.

Figure 16 is a flow chart illustrating the process (S30) of the inter-member influence degree calculation part 360. As illustrated in Figure 16, in Step 300 (S300), the inter-member influence degree calculation part 360 determines whether or not all members #m (m represents a plurality of integers. Not all of "m"s may be the same number) have been analyzed, and ends the process when all members have been analyzed and otherwise proceeds to S302.

In Step 302 (S302), the inter-member influence degree calculation part 360 sets the member #m who has created the diffusion source message information and is an analysis target (diffusion source member) as an unanalyzed member.

In Step 304 (S304), the inter-member influence degree calculation part 360 determines whether or not all members #n (n represents a plurality of integers. Not all of "n"s may be the same number) have been analyzed, and returns to S300 when all members have been analyzed and otherwise proceeds to S306.

In Step 306 (S306), the inter-member influence degree calculation part 360 sets the member #n who has created the diffusion target message information and is an analysis target (diffusion target member) as an unanalyzed member.

In Step 308 (S308), the inter-member influence degree calculation part 360 extracts from the message influence analysis part every piece of message influence information that has the message posted by the member #m as the information diffusion source and the message posted by the member #n as the information diffusion target.

In Step 310 (S310), the inter-member influence degree calculation part 360 calculates the sum of influence of the extracted message influence information, and returns to S304.

The process in S310 is expressed in the form of mathematical expression as follows:

[Mathematical Expression 9]

$$P_{ij} = \sum_{k \in Si} \sum_{l \in S_j} I_{kl}$$

In this expression, $P_{ij}$ represents the information influence degree of the member #i with respect to the member #j, $S_i$ represents the set of messages posted by the member #i, and $S_j$ represents the set of messages posted by the member #j.

Figure 17 is a diagram exemplifying a structure of inter-member influence degree information which is created by the message influence degree calculation part 360.

As illustrated in Figure 17, inter-member influence degree information contains an identifier of a member who is the source of information diffusion (diffusion-source-message-posted-member ID), an identifier of a member who is the target of information diffusion (diffusion-target-message-posted-member ID), and influence degree information.

The message influence information is created for the information diffusion source member and the information diffusion target member each.

The inter-member influence degree information management part 362 (Figure 15) receives the inter-member influence degree information created by the message influence degree calculation part 360, and stores the information in the inter-member influence degree information DB 364.

The inter-member influence degree information management part 362 manages I/O of the information stored in the inter-member influence degree information DB 364.

The member relation selection part 366 acquires inter-member influence degree information from the inter-member influence degree information management part 362, and extracts inter-member influence degree information that has an influence degree equal to or larger than a predetermined value (for example, 0.5).

The member relation selection part 366 selects a pair of a diffusion source member and a diffusion target member of the extracted inter-member influence degree information, and outputs information that indicates the pair to the member relation information management part 368.

The member relation information management part 368 receives the information that indicates the member pair selected by the member relation selection part 366 (member relation information), and stores the information in the member relation information DB 370.

The member relation information management part 368 manages I/O of the information stored in the member relation information DB 370.

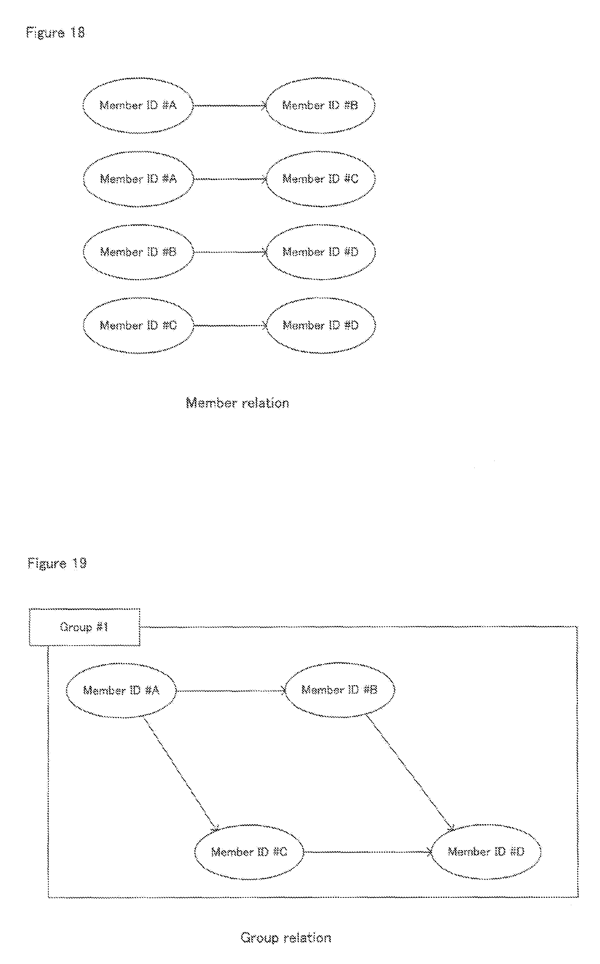

Figure 18 is a diagram exemplifying a member relation.

In the example of Figure 18, information is diffused from a member who has a member ID #A (member #A) to a member who has a member ID #B (member #B).

Also, information is diffused from the member #A to a member who has a member ID #C (member #C), and information is diffused from the member #B to a member who has a member ID #D (member #D).

There is also information diffusion from the member #C to the member #D.

The member relation information management part 368 manages member relation information which indicates pairs of member IDs as those illustrated in Figure 18.

The group construction part 372 (Figure 15) extracts member relation information from the member relation information management part 368 and, based on the extracted member relation information, constructs a group throughout which information tends to be diffused.

The group construction part 372 creates information about this group (group relation information) in association with the identifier of the group, and outputs the information to the group relation information management part 374.

Figure 19 is a diagram illustrating a group relation constructed from the member relation exemplified in Figure 18.

As illustrated in Figure 19, a group denoted as a group #1 is constituted of members denoted by the member IDs #A, #B, #C, and #D, and information tends to be diffused from the member #A to the member #B and from the member #B to the member #D.

Information tends to be diffused also from the member #A to the member #C and from the member #C to the member #D.

The group relation information management part 374 (Figure 15) receives group relation information from the group construction part 372, and stores the information in the group relation information DB 376.

The group relation information management part 374 manages I/O of the information stored in the group relation information DB 376.

When necessary, the group relation information management part 374 outputs group relation information to the group relation information display part 310 and the provided information sending part 316.

Figure 20 is a diagram illustrating a configuration of the influencer analysis part 38 illustrated in Figure 7.

As illustrated in Figure 20, the influencer analysis part 38 includes a member influence calculation part 380, a member influence information management part 382, a member influence information DB 384, an influencer selection/management part 386, and an influencer information DB 388.

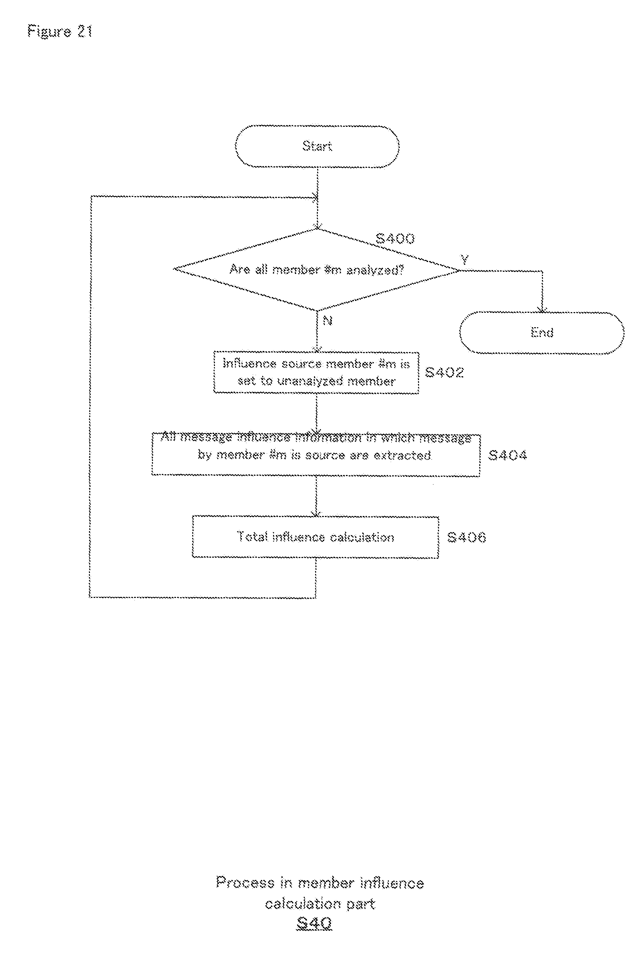

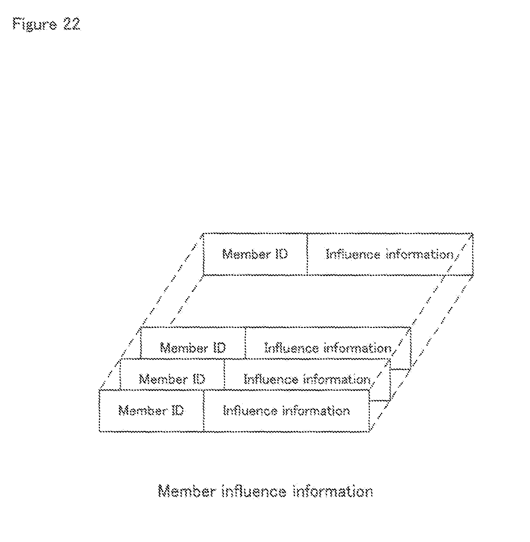

In the influencer analysis part 38, the member influence calculation part 380 performs a process illustrated in Figure 21 to calculate the influence of each member over other members, and creates member influence information, which is described later with reference to Figure 22.

The member influence calculation part 380 outputs the created member influence information to the member influence information management part 382.

Figure 21 is a flow chart illustrating the process (S40) of the member influence calculation part 380.

As illustrated in Figure 21, in Step 400 (S400), the member influence calculation part 380 determines whether or not all members #m have been analyzed, and ends the process when all members have been analyzed and otherwise proceeds to S402.

In Step 402 (S402), the member influence calculation part 380 sets the diffusion source member #m who is an analysis target as an unanalyzed member.

In Step 404 (S404), the member influence calculation part 380 extracts from the message influence analysis part 34 every piece of message influence information that has a message posted by the member #m as the diffusion source.

In Step 406 (S406), the member influence calculation part 380 calculates the sum of influence of all the extracted pieces of message influence information, and returns to S400.

The process in S406 is expressed in the form of mathematical expression as follows:

[Mathematical Expression 10]

$$P_i = \sum_{k \in S_i} I_k$$

P$_i$ represents the influence of the member #i.

I$_i$ is expressed by the following expression:

[Mathematical Expression 11]

$$I_i = \sum_j I_{ij}$$

Figure 22 is a diagram exemplifying a structure of member influence information which is created by the member influence calculation part 380.

As illustrated in Figure 22, member influence information contains a member ID and influence information of the member. The member influence information is created for each member.

The member influence information management part 382 (Figure 20) receives the member influence information created by the member influence calculation part 380, and stores the information in the member influence information DB 384.

The member influence information management part 382 manages I/O of the information stored in the member influence information DB 384.

When member influence information stored in the member influence information DB 384 indicates an influence equal to or larger than a predetermined value, the influencer selection/management part 386 selects a member who is associated with this member influence information as an influencer.

The influencer selection/management part 386 stores the identifier of each selected influencer in the influencer information DB 388.

The influencer selection/management part 386 manages I/O of the information stored in the influencer information DB 388. When necessary, the influencer selection/management part 386 outputs influencer information to the influencer display part 312 and the provided information sending part 316.

Influencer information may be associated with the group ID described above.

Specifically, influencer information or group relation information may be structured such that a member who has the greatest influence within a group is selected as an influencer (in the example of Figure 19, the member #A is selected as the influencer of the group #1).

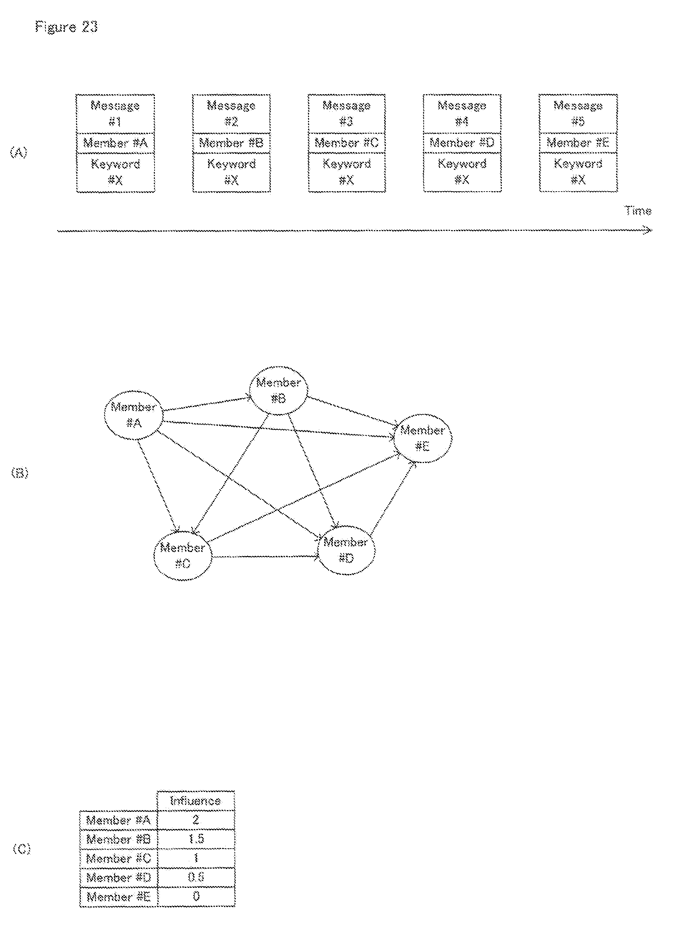

Figures 23 are diagrams exemplifying the message chain structure and analysis results in this embodiment. Figure 23(A) is a diagram illustrating a first example of the message chain structure, Figure 23(B) is a diagram exemplifying a group relation in the first example, and Figure 23(C) is a diagram exemplifying an influence of each member in the first example.

As illustrated in Figure 23(A), in the first example, there is no reply relation between messages and each message contains the keyword #X.

In this example, a group relation as the one illustrated in Figure 23(B) is constructed through the processes in the message chain structure analysis part 32, the message influence analysis part 34, and the member relation analysis part 36.

The influence of each member is calculated as illustrated in Figure 23(C) through the process in the influencer analysis part 38.

Here, the member #A who has the greatest influence may be selected as an influencer.

In this embodiment, a group relation and the influence of each member are deduced properly by taking into consideration the fact that, while the messages do not have a reply relation with one another, the keyword #X is contained in all the messages.

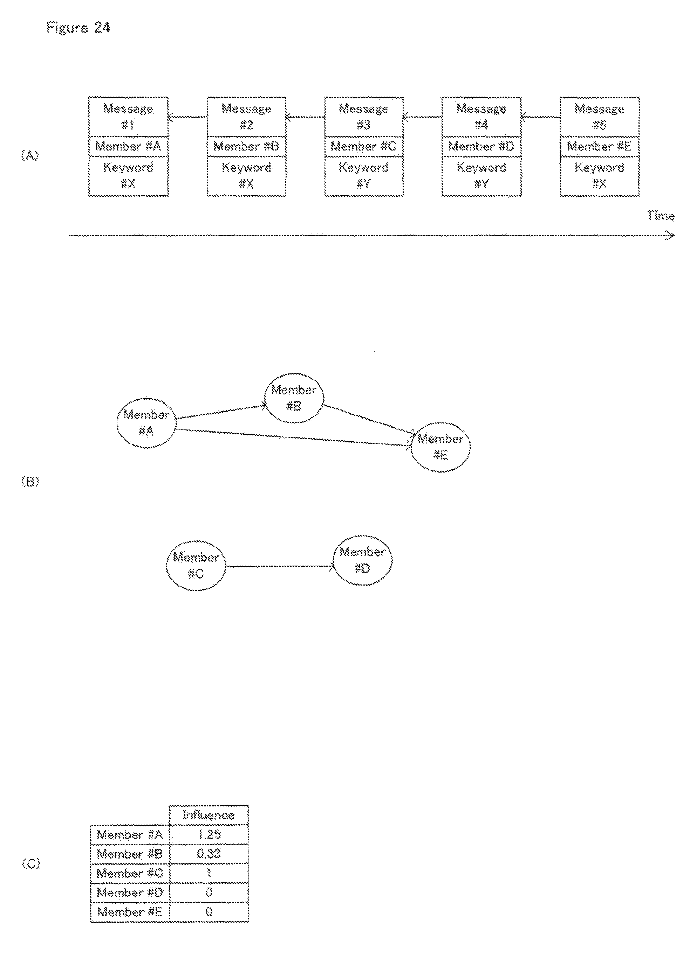

Figures 24 are diagrams exemplifying the message chain structure and analysis results in this embodiment. Figure 24(A) is a diagram illustrating a second example of the message chain structure, Figure 24(B) is a diagram exemplifying a group relation in the second example, and Figure 24(C) is a diagram exemplifying an influence of each member in the second example.

As illustrated in Figure 24(A), in the second example, each message is a reply to a message posted immediately before the message, and the messages #1, #2, and #5 contain the keyword #X, and the messages #3 and #4 contain the keyword #Y.

In the second example, a group relation as the one illustrated in Figure 24(B) is constructed through the processes in the message chain structure analysis part 32, the message influence analysis part 34, and the member relation analysis part 36.

The influence of each member is calculated as illustrated in Figure 24(C) through the process in the influencer analysis part 38.

Here, the member #A who has the greatest influence may be selected as an influencer.

In the second example, the interval between the message #1 and the message #5 and the interval between the message #2 and the message #5 are wide because other messages are interposed.

On the other hand, this embodiment takes into consideration the fact that each message contains the same keyword, #X, to properly deduce the influence in information diffusion from the message #1 to the message #5 and the influence in information diffusion from the message #2 to the message #5.

Consequently, in this embodiment, the information influence degree of the member #A with respect to the member #E and the information influence degree of the member #B with respect to the member #E are deduced properly.

According to this embodiment, a group relation and the influence of each member are thus properly derived in the second example as well.

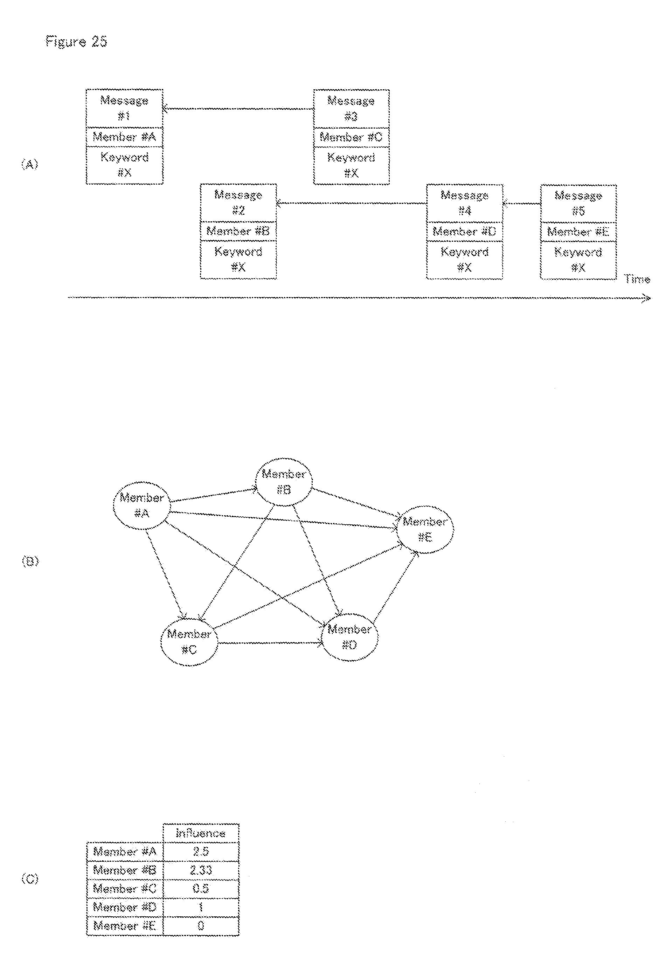

Figures 25 are diagrams exemplifying the message chain structure and analysis results in this embodiment. Figure 25(A) is a diagram illustrating a third example of the message chain structure, Figure 25(B) is a diagram exemplifying a group relation in the third example, and Figure 25(C) is a diagram exemplifying an influence of each member in the third example.

As illustrated in Figure 25(A), in the third example, each message contains the keyword #X, the message #3 is a reply to the message #1, the message #4 is a reply to the message #2, and the message #5 is a reply to the message #4.

In the third example, a group relation as the one illustrated in Figure 25(B) is constructed through the processes in the message chain structure analysis part 32, the message influence analysis part 34, and the member relation analysis part 36.

The influence of each member is calculated as illustrated in Figure 25(C) through the process in the influencer analysis part 38.

Here, the member #A who has the greatest influence may be selected as an influencer.

In the third example, two message chain structures are formed, which are a message chain structure constituted of the messages #1 and #3 and a message chain structure constituted of the messages #2, #4, and #5.

On the other hand, this embodiment takes into consideration the fact that each message contains the same keyword, #X, to properly deduce for each message the message influence with respect to another message across different message chain structures.

Consequently, in this embodiment, the information influence degree of the member #A with respect to the members #B, #D, and #E, the information influence degree of the member #B with respect to the member #C, and the information influence degree of the member #C with respect to the members #D and #E are deduced properly.

According to this embodiment, a group relation and the influence of each member are thus properly derived in the third example as well.

[Overall Operation of the Information Diffusion Analysis System 1]

An overall operation of the information diffusion analysis system 1 is described below.

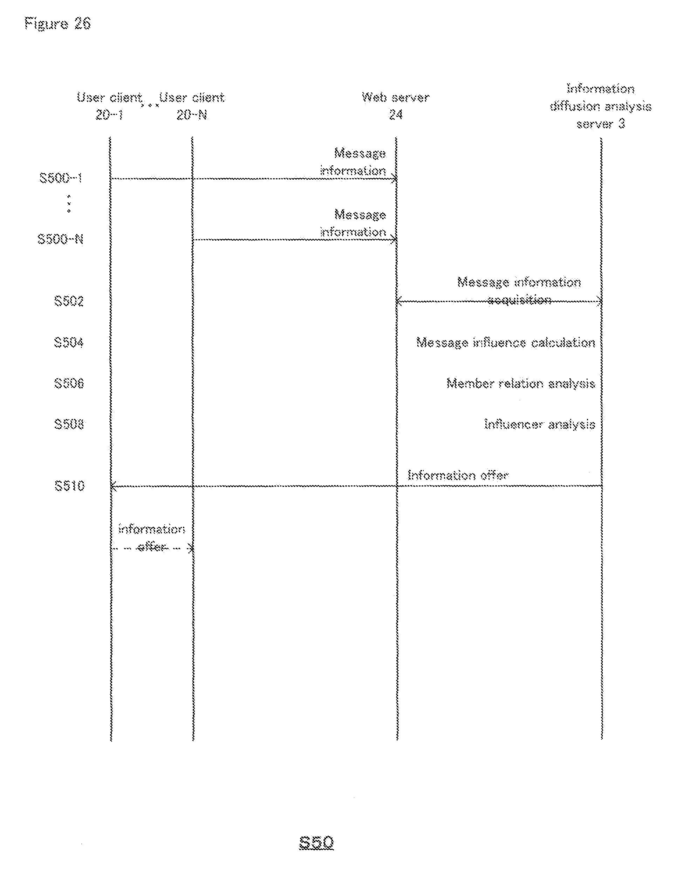

Figure 26 is a communication sequence diagram illustrating the overall operation (S50) of the information diffusion analysis system 1 illustrated in Figure 1.

As illustrated in Figure 26, in Steps 500-1 to 500-N (S500-1 to 500-N), the user clients 20-1 to 20-N send message information containing user IDs to the web server 24.

In Step 502 (S502), the information diffusion analysis server 3 acquires the message information from the web server 24.

In Step 504 (S504), the information diffusion analysis server 3 calculates message influence.

In Step 506 (S506), the information diffusion analysis server 3 performs a member relation analysis to select a member relation and construct a group.

In Step 508 (S508), the information diffusion analysis server 3 performs an influencer analysis to select an influencer.

In Step 510 (S510), the information diffusion analysis server 3 provides certain information to the user client 20-1 of the influencer.

Wishing to have other members transmit the provided information as well, the influencer provides the information to the user client 20 of another member, and the member to which the information is provided provides the information to the user 20 of still another member. Information may thus be diffused. Industrial Applicability

The present invention is applicable to an information diffusion analysis system and the like.

Description of Symbols

1      information diffusion analysis system

100     network
20     user client

120     main body
122     CPU
124     memory
126     I/O device
128     communication device
130     storage device
132     storage medium
200     user client program
202     communication process part
204     UI
210     mail creation part
212     mail sending part
214     mail receiving part
216     web page viewing process part
218     message information creation part

24     web server

240     web server program
242     communication process part
244     user ID receiving part
248     message information receiving part
250     mail receiving part
252     mail sending part
254     URL receiving part
256     web data sending part
260     community space management part
270     community space DB

3     information diffusion analysis server
30     information diffusion analysis program

300, 302     communication process part
304     admin IF

32     message chain structure analysis part

320     community ID receiving part
322     message information acquisition part
324     message information management part
326     message information DB
328     message information analysis part
330     chain structure information management part
332     chain structure information DB

34     message influence analysis part

340     message influence calculation part
342     information-influence-within-chain-structure calculation part
344     explicit relation-based information influence calculation part
346     implicit relation-based information influence calculation part
350     information-influence-outside-chain-structure calculation part
352     influence information management part
356     message influence information DB

36      member relation analysis part

360     inter-member influence degree calculation part
362     inter-member influence degree information management part
364     inter-member influence degree information DB
366     member relation selection part
368     member relation information management part
370     member relation information DB
372     group construction part
374     group relation information management part
376     group relation information DB

38      influencer analysis part

380     member influence calculation part
382     member influence information management part
384     member influence information DB
386     influencer selection/management part
388     influencer information DB
310     group relation display part
312     influencer display part
314     provided information receiving part
316     provided information sending part

**Claims**

1.  An information diffusion analysis system, comprising:

    a plurality of user clients;
    an information providing device for storing a plurality of pieces of message information received from the plurality of user clients and providing the plurality of pieces of message information to a network; and
    an information diffusion analysis server,
    the plurality of user clients, the information providing device, and the information diffusion analysis server being interconnected via the network,

    wherein the information diffusion analysis server comprises:

    information relation analyzing means for acquiring the plurality of pieces of message information from the information providing device and analyzing a relation among the plurality of pieces of message information;
    message influence calculating means for calculating, based on the relation among the plurality of pieces of message information, for each of the plurality of pieces of message information, an information influence with respect to another piece of the plurality of pieces of message information;
    inter-user influence degree calculating means for calculating, based on the calculated influence, an information influence degree among users of the plurality of user clients that have sent the plurality of pieces of message information;
    user relation selecting means for checking a plurality of the calculated information influence degrees among the users to select at least one user pair that has an information influence degree among the users larger than a predetermined value; and
    group constructing means for constructing a predetermined group based on the at least one selected user pair.

2.  An information diffusion analysis system according to claim 1, wherein the information diffusion analysis server further comprises:

    user influence calculating means for calculating, based on the calculated influence, for each of the users of the plurality of user clients that have sent the plurality of pieces of message information, an influence over another one of the users; and
    most influential user selecting means for selecting one of the users who has the greatest influence based on the calculated influence of the each of the users.

**3.** An information diffusion analysis system according to claim 1 or 2, further comprising information sending means for sending predetermined information to the plurality of user clients based on at least one of information about the predetermined group constructed by the group constructing means and information about the one of the users selected by the most influential user selecting means.

**4.** An information diffusion analysis system according to any one of claims 1 to 3,
wherein the information relation analyzing means comprises:

original message ID extracting means for extracting from the each of the plurality of pieces of message information an identifier of a message as a reply destination of a message of the each of the plurality of pieces of message information;
keyword information extracting means for extracting at least one piece of keyword information from the each of the plurality of pieces of message information; and
reply relation structure information creating means for analyzing, based on the extracted identifier of the message as the reply destination, whether or not the each of the plurality of pieces of message information is in a reply relation with the another piece of the plurality of pieces of message information, and creating information about a reply relation structure where the plurality of pieces of message information that are in the reply relation are connected, and

wherein the message influence calculating means comprises at least two of:

explicit relation-based information influence calculating means for calculating an influence in diffusion of the at least one piece of keyword information from first message information among the plurality of pieces of message information to second message information that is in the same reply relation structure as the first message information, via message information that is interposed between the first message information and the second message information in the reply relation structure;
implicit relation-based information influence calculating means for calculating an influence in diffusion of the at least one piece of keyword information from the first message information to the second message information, which occurs without passing through at least one piece of the message information between the first message information and the second message information in the reply relation structure; and
information-influence-outside-reply-relation-structure calculating means for calculating an influence in diffusion of the at least one piece of keyword information from the first message information to third message information which is in the reply relation structure different from the reply relation structure of the first message information.

**5.** An information diffusion analysis system according to claim 4, wherein the third message information is created within a predetermined period of time since creation of the first message information.

**6.** An information diffusion analysis system according to any one of claims 1 to 5, wherein at least two of the plurality of user clients, the information providing device, and the information diffusion analysis server physically reside in the same node.

**7.** An information diffusion analysis server interconnected via a network with a plurality of user clients and an information providing device for storing a plurality of pieces of message information received from the plurality of user clients and providing the plurality of pieces of message information to the network, comprising:

information relation analyzing means for acquiring the plurality of pieces of message information from the information providing device and analyzing a relation among the plurality of pieces of message information;
message influence calculating means for calculating, based on the relation among the plurality of pieces of message information, for each of the plurality of pieces of message information, an information influence with respect to another piece of the plurality of pieces of message information;
inter-user influence degree calculating means for calculating, based on the calculated influence, an information influence degree among users of the plurality of user clients that have sent the plurality of pieces of message information;
user relation selecting means for checking a plurality of the calculated information influence degrees among the users to select at least one user pair that has an information influence degree among the users larger than a predetermined value; and

group constructing means for constructing a predetermined group based on the at least one selected user pair.

8. An information diffusion analysis server according to claim 7, further comprising:

user influence calculating means for calculating, based on the calculated influence, for each of the users of the plurality of user clients that have sent the plurality of pieces of message information, an influence over another one of the users; and

most influential user selecting means for selecting one of the users who has the greatest influence based on the calculated influence of the each of the users.

9. An information diffusion analysis method performed among a plurality of user clients, an information providing device for storing a plurality of pieces of message information received from the plurality of user clients and providing the plurality of pieces of message information to a network, and an information diffusion analysis server,

the plurality of user clients, the information providing device, and the information diffusion analysis server being interconnected via the network,

the information diffusion analysis method comprising:

an information relation analyzing step of acquiring the plurality of pieces of message information from the information providing device and analyzing a relation among the plurality of pieces of message information;

a message influence calculating step of calculating, based on the relation among the plurality of pieces of message information, for each of the plurality of pieces of message information, an information influence with respect to another piece of the plurality of pieces of message information;

an inter-user influence degree calculating step of calculating, based on the calculated influence, an information influence degree among users of the plurality of user clients that have sent the plurality of pieces of message information;

a user relation selecting step of checking a plurality of the calculated information influence degrees among the users to select at least one user pair that has an information influence degree among the users larger than a predetermined value; and

a group constructing step of constructing a predetermined group based on the at least one selected user pair.

10. An information diffusion analysis method according to claim 8, further comprising:

a user influence calculating step of calculating, based on the calculated influence, for each of the users of the plurality of user clients that have sent the plurality of pieces of message information, an influence over another one of the users; and

a most influential user selecting step of selecting one of the users who has the greatest influence based on the calculated influence of the each of the users.

11. An information diffusion analysis program executed among a plurality of user clients, an information providing device for storing a plurality of pieces of message information received from the plurality of user clients and providing the plurality of pieces of message information to a network, and an information diffusion analysis server,

the plurality of user clients, the information providing device, and the information diffusion analysis server being interconnected via the network,

the information diffusion analysis program causing a computer to execute:

an information relation analyzing step of acquiring the plurality of pieces of message information from the information providing device and analyzing a relation among the plurality of pieces of message information;

a message influence calculating step of calculating, based on the relation among the plurality of pieces of message information, for each of the plurality of pieces of message information, an information influence with respect to another piece of the plurality of pieces of message information;

an inter-user influence degree calculating step of calculating, based on the calculated influence, an information influence degree among users of the plurality of user clients that have sent the plurality of pieces of message information;

a user relation selecting step of checking a plurality of the calculated information influence degrees among the users to select at least one user pair that has an information influence degree among the users larger than a predetermined value; and

a group constructing step of constructing a predetermined group based on the at least one selected user pair.

Figure 1

Information
Diffusion Analysis
Server
3

Web Server
24

Network 100

User client
20-1

User client
20-2

· · · · ·

User client
20-N

Figure 2

Figure 3

Input/Output
device

126

CPU
122

Memory
124

120

Communication
device

128

Storage
Device

130

132

Media

20, 24, 3

Figure 4

```
Input/Output
   Device
      ⟷    ┌─────┐        ┌────────────┐      ┌────────────┐      ┌──────────┐
            │     │───────→│mail creation│─────→│mail sending│─────→│          │
            │     │        │    210     │      │    212     │      │  Com     │ Web
            │     │        └────────────┘      └────────────┘      │  muni    │server
            │ UI  │←──────────────────┌────────────┐──────────────│  cati    │ ⟷
            │ 204 │                   │mail receiving│             │  on      │
            │     │                   │    214     │              │  proc    │
            │     │                   └────────────┘              │  ess     │
            │     │←───────────────────────────┌──────────┐       │  202     │
            │     │       ┌────────────┐        │ Web page │←──────│          │
            │     │──────→│  Message   │───────→│   view   │       │          │
            │     │       │information │        │ process  │       │          │
            │     │       │ creation   │        │   216    │       │          │
            │     │       │    218     │        └──────────┘       │          │
            └─────┘       └────────────┘                          └──────────┘
```

User client program 200

Figure 5

User ID receiving
244

Message information
receiving
248

Mail receiving
250

Mail sending
252

URL receiving
254

Web data sending
256

Network

com
muni
cati
on
proc
ess
242

Community
space
manageme
nt
280

Community
Space DB
270

Web server program 240

Figure 6

| Community ID | Message ID | Member ID | Time | Reply message ID | Message content |
|---|---|---|---|---|---|

Message information

Figure 7

Web server

Communication process
300

Message chain structure
analysis
32

Message influential degree analysis
34

I/O device

Admin
IF
304

Member relation
analysis
36

Influencer analysis
38

Group relation
display
310

Influencer
display
312

Offered
information
receiving
314

Offered
information
sending
316

Communication process
302

User client

Information diffusion analysis program 30

Figure 8

I/O device

Web server

Community
ID
receiving
320

Message
information
acquisition
322

Message
information
management
324

Message
information
DB
326

Message
information
analysis
328

Chain structure
information
management
330

Chain
structure
information DB
332

Message influence analysis part

Message link structure analysis part 32

Figure 9

```
                    ┌─────────────────┐
                    │      Start       │
                    └─────────────────┘
                             │
        ┌────────────────────┤
        │                    │
        │              ╱──────────────╲          S100
        │             ╱ Are all message ╲  Y
        │        ◁───◁ information #i     ◁──────────┐
        │             ╲ analyzed?        ╱           │
        │              ╲──────────────╱              │
        │                    │ N                    ┌─┴─┐
        │         ┌──────────────────────┐          │ A │
        │         │ Analytic target       │  S102    └───┘
        │         │ message information   │
        │         │ #i is set to          │
        │         │ unanalyzed message    │
        │         │ information           │
        │         └──────────────────────┘
        │                    │
        │         ┌──────────────────────┐
        │         │ Message information   │  S104
        │         │ #i is obtained        │
        │         └──────────────────────┘
        │                    │
        │         ┌──────────────────────┐
        │         │ Member ID, time and   │  S106
        │         │ keyword are extracted │
        │         └──────────────────────┘
        │                    │
        │              ╱──────────────╲          S108
        │             ╱ Reply message   ╲  N
        │        ◁───◁ ID is included?   ◁──────────┐
        │             ╲                 ╱           │
        │              ╲──────────────╱              │
        │                    │ Y                     │
        │         ┌──────────────────────┐           │
        │         │ Reply message ID is   │  S110     │
        │         │ extracted             │           │
        │         └──────────────────────┘           │
        │                    │                       │
        │                    ├───────────────────────┘
        │         ┌──────────────────────┐
        │         │ Extracted information │  S112
        │         │ is stored             │
        │         └──────────────────────┘
        │                    │
        └────────────────────┘
```

Process in message information
analysis part
S10

Figure 10

Process in message information
analysis part
S10

Figure 11

| Message chain structure ID | | | |
|---|---|---|---|
| #1: First message ID | Member ID that create message #1 | Time | Keyword information in message #1 |
| #2: Message ID that reply to message #1 | Member ID that create message #2 | Time | Keyword information in message #2 |
| #3 Message ID that reply to message #2 | Member ID that create message #3 | Time | Keyword information in message #3 |
| | | | |
| #M: Message ID that reply to message #M-1 | Member ID that create message #M | Time | Keyword information in message #M |

Chain structure information

Figure 12

Message chain structure
analysis part

Message influence
calculation 340

Information
influence
calculation in
chain structure
342

Information
influence
calculation based
on explicit relation
344

Information
influence
calculation out of
chain structure
350

Information
influence
calculation based
on implicit relation
346

Influence
information
management 352

Message
influence
information
DB 356

Member relation analysis part
and influence analysis part

Message influence analysis part 34

Figure 13

```
                        ┌─────────────┐
                        │    Start    │
                        └──────┬──────┘
                               │           S200
                        ╱──────┴──────╲           Y
         ┌─────────────< Are all messages information #i analyzed? >──────────┐
         │              ╲─────────────╱                                       │
         │                     │ N                                    ┌───────┴──────┐
         │                     ▼                                      │     End      │
         │          ┌──────────────────────┐                         └──────────────┘
         │          │ Analytic target message │  S202
         │          │ information #i is set to │
         │          │ unanalyzed message information │
         │          └──────────┬───────────┘
         │                     ▼
         │          ┌──────────────────┐
         │          │ Message information #i is │  S204
         │          │ obtained          │
         │          └──────────┬───────┘
         │                     ▼                              S206
         │              ╱──────┴──────╲
         │    Y    ┌───< Are all messages that posted after message >──┐
         └─────────┘    ╲ information #i analyzed?      ╱               │
                        ╲─────────────╱                                 │
                               │ N                                      │
                               ▼                                        │
                    ┌──────────────────────┐                           │
                    │ Analytic target message │  S208                  │
                    │ information #j is set to │                        │
                    │ unanalyzed message information │                  │
                    └──────────┬───────────┘                           │
                               ▼                                        │
                    ┌──────────────────┐                               │
                    │ Message information #j is │  S210                │
                    │ obtained          │                              │
                    └──────────┬───────┘                               │
                               ▼           S212                        │
                        ╱──────┴──────╲              N                 │
              ┌────────< Is message information #j in the same chain >──┐
              │         ╲ structure as message information #i? ╱        │
              │         ╲─────────────╱                                 │
              │                │ Y                  S216                │
              │                │              ╱──────┴──────╲      N    │
              │                │       ┌─────< Is message #j posted from message #i in >──┐
              │                │       │      ╲ specified period?       ╱                 │
              │                │       │      ╲─────────────╱                             │
              │                ▼       ▼ Y                                                │
              │     ┌──────────────┐  ┌──────────────┐                                   │
              │     │ Influence in the │ Influence in the │                              │
              │ S214│ same chain    │  │ different chain  │ S218                         │
              │     │ structure is  │  │ structure is     │                              │
              │     │ calculated    │  │ calculated       │                              │
              │     └──────┬───────┘  └───────┬──────┘                                   │
              └───────────┴──────────────────┴───────────────────────────────────────────┘
```

Process in message influence
calculation part
S20

Figure 14

| Diffusible source message ID | Member ID that post diffusible source message | Diffusible target message ID | Member ID that post diffusible target message | influence information |
|---|---|---|---|---|
| Diffusible | Member ID that post | Diffusible | Member ID that post | |
| Diffusible source message ID | Member ID that post diffusible source message | Diffusible target message ID | Member ID that post diffusible target message | influence information |

Message influence information

# EP 2 172 899 A1

Figure 15

Message influence analysis part

Influential degree of
member relation
calculation
360

Influential
degree
information
of member
relation DB
364

Influential degree
information of member
relation management 362

Member relation
selection 366

Member
relation
information
DB 370

Member relation
information management
368

Group construction 372

Group relation
information DB
376

Group relation
information management
374

Group relation display part and
Offered information sending
part

Member relation analysis part 36

38

Figure 16

```
                    ┌──────────────┐
                    │    Start     │
                    └──────┬───────┘
                           │
    ┌──────────────────────┼
    │                      ▼
    │              ╱◇╲        S300
    │         ╱         ╲              Y
    │       ╱ Are all member ╲───────────────┐
    │       ╲  #m analyzed?  ╱                │
    │         ╲           ╱                   ▼
    │              ╲◇╱                   ┌──────────┐
    │               │ N                  │   End    │
    │               ▼                    └──────────┘
    │      ┌──────────────────┐
    │      │ Diffusible source │  S302
    │      │ member #m is set  │
    │      │ to unanalyzed     │
    │      │ member            │
    │      └─────────┬────────┘
    │                │                              ┌───────┐
    │                ▼                              │       │
    │  Y        ╱◇╲        S304                     │
    ├─────────╱         ╲                           │
            ╱ Are all member ╲                      │
            ╲  #n analyzed?  ╱                      │
              ╲           ╱                         │
                   ╲◇╱                              │
                    │ N                             │
                    ▼                               │
           ┌──────────────────┐                     │
           │ Diffusible target │  S306               │
           │ member #n is set  │                     │
           │ to unanalyzed     │                     │
           │ member            │                     │
           └─────────┬────────┘                      │
                     ▼                               │
   ┌─────────────────────────────────────┐          │
   │ All messages influence information   │  S308     │
   │ in which message by member #m is     │          │
   │ source and message by member #n is   │          │
   │ target are extracted.                │          │
   └─────────────────┬───────────────────┘          │
                     ▼                               │
        ┌──────────────────────────┐                │
        │ Total influence calculation │  S310        │
        └─────────────┬────────────┘                │
                      └──────────────────────────────┘
```

Process in influential degree
information of member relation
calculation part    S96

Figure 17

| Diffusible source member ID | Diffusible target member ID | influential degree information |
|---|---|---|

| Diffusible source | Diffusible target member | influential degree information |
|---|---|---|

| Diffusible source | Diffusible target member | influential degree information |
|---|---|---|

| Diffusible source member ID | Diffusible target member ID | influential degree information |
|---|---|---|

Influential degree information of
member relation

Figure 18

Member relation

Figure 19

Group relation

Figure 20

Message influence analysis part

Member influence
calculation 380

Member influence
information management
382

Member
influence
information DB
384

Influencer
selection/management
386

Influencer
information DB
388

Influencer display part and
offered information sending part

Influencer analysis 39

Figure 21

```
                          ┌──────────────┐
                          │    Start     │
                          └──────┬───────┘
                                 │
       ┌─────────────────────────┤
       │                         │
       │                    S400 │
       │                   ◇─────┴─────◇
       │              ◇                   ◇         Y
       │         ◇  Are all member #m analyzed?  ◇──────┐
       │              ◇                   ◇             │
       │                   ◇─────┬─────◇               │
       │                      N  │                     ▼
       │                         │            ┌──────────────┐
       │          ┌──────────────┴──────┐     │     End      │
       │          │ Influence source    │S402 └──────────────┘
       │          │ member #m is set to │
       │          │ unanalyzed member   │
       │          └──────────┬──────────┘
       │                     │
       │    ┌────────────────┴──────────────────┐
       │    │ All message influence information  │S404
       │    │ in which message by member #m is   │
       │    │ source are extracted               │
       │    └────────────────┬──────────────────┘
       │                     │
       │          ┌──────────┴──────────┐
       │          │ Total influence     │S406
       │          │ calculation         │
       │          └──────────┬──────────┘
       │                     │
       └─────────────────────┘
```

Process in member influence
calculation part
S40

Figure 22

Member influence information

Figure 23

(A)

| Message #1 | Message #2 | Message #3 | Message #4 | Message #5 |
|---|---|---|---|---|
| Member #A | Member #B | Member #C | Member #D | Member #E |
| Keyword #X | Keyword #X | Keyword #X | Keyword #X | Keyword #X |

Time

(B)

| | Influence |
|---|---|
| Member #A | 2 |
| Member #B | 1.5 |
| Member #C | 1 |
| Member #D | 0.5 |
| Member #E | 0 |

(C)

Figure 24

(A)

| Message #1 | Message #2 | Message #3 | Message #4 | Message #5 |
|---|---|---|---|---|
| Member #A | Member #B | Member #C | Member #D | Member #E |
| Keyword #X | Keyword #X | Keyword #Y | Keyword #Y | Keyword #X |

Time

(B)

Member #A → Member #B → Member #E

Member #C — Member #D

(C)

| | Influence |
|---|---|
| Member #A | 1.25 |
| Member #B | 0.33 |
| Member #C | 1 |
| Member #D | 0 |
| Member #E | 0 |

46

Figure 25

(A)

```
┌──────────────┐              ┌──────────────┐
│  Message     │◄─────────────│  Message     │
│    #1        │              │    #3        │
├──────────────┤              ├──────────────┤
│  Member #A   │              │  Member #C   │
├──────────────┤              ├──────────────┤
│  Keyword     │              │  Keyword     │
│    #X        │              │    #X        │
└──────────────┘              └──────────────┘

        ┌──────────────┐      ┌──────────────┐   ┌──────────────┐
        │  Message     │◄─────│  Message     │◄──│  Message     │
        │    #2        │      │    #4        │   │    #5        │
        ├──────────────┤      ├──────────────┤   ├──────────────┤
        │  Member #B   │      │  Member #D   │   │  Member #E   │
        ├──────────────┤      ├──────────────┤   ├──────────────┤
        │  Keyword     │      │  Keyword     │   │  Keyword     │
        │    #X        │      │    #X        │   │    #X        │
        └──────────────┘      └──────────────┘   └──────────────┘    Time
───────────────────────────────────────────────────────────────────────►
```

(B)

(C)

|            | Influence |
|------------|-----------|
| Member #A  | 2.5       |
| Member #B  | 2.33      |
| Member #C  | 0.5       |
| Member #D  | 1         |
| Member #E  | 0         |

47

Figure 26

S50

## INTERNATIONAL SEARCH REPORT

| | International application No. |
|---|---|
| | PCT/JP2007/064315 |

A. CLASSIFICATION OF SUBJECT MATTER
*G06Q50/00(2006.01)i, G06F13/00(2006.01)i*

According to International Patent Classification (IPC) or to both national classification and IPC

B. FIELDS SEARCHED

Minimum documentation searched (classification system followed by classification symbols)
G06Q50/00, G06F13/00

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Masahiro MATSUMURA et al., "Text ni yoru Communication ni Okeru Eikyo no Fukyu Model", Transactions of the Japanese Society for Artificial Intelligence, 01 November, 2002 (01.11.02), Vol.17, No.3, pages 259 to 267 | 1-11 |
| Y | JP 2004-127196 A (Kabushiki Kaisha Fuji Sogo Kenkyusho), 22 April, 2004 (22.04.04), Par. Nos. [0070] to [0088] (Family: none) | 1-11 |

☐ Further documents are listed in the continuation of Box C. ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 06 August, 2007 (06.08.07) | 14 August, 2007 (14.08.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007052557 A
- JP 2001273455 A
- JP 11265369 A
- JP 2004171042 A

### Non-patent literature cited in the description

- **Matsuo, Hamasaki.** Social Network Mining and Artificial Intelligence. *The 20th Annual Conference of the Japanese Society for Artificial Intelligence,* 2006
- **Tyler ; Wilkinson ; Huberman.** Email as spectroscopy: Automated discovery of community structure within organization. *Proceedings of the International conference on communities and technologies*
- **Matsumura ; Osawa ; Ishizuka.** A Model of Influence Propagation in Text Communication. *Journal of the Japanese Society for Artificial Intelligence,* 2002, vol. 17 (3
- **Adar ; Adamic.** Implicit structure and the dynamics of blogspace. *13th International World Wide Web Conference*